# EUROPÄISCHE PATENTSCHRIFT

(11) **EP 2 094 996 B1**
(45) Veröffentlichungstag und Bekanntmachung des Hinweises auf die Patenterteilung: **01.02.2012**
(21) Anmeldenummer: 07821183.6
(22) Anmeldetag: 11.10.2007
(51) Int. Cl.: F16H 61/28, F16H 61/02, F16H 61/688

(54) **HYDRAULISCHE STEUERUNGSVORRICHTUNG EINES AUTOMATISIERTEN STUFENSCHALTGETRIEBES**
HYDRAULIC CONTROL APPARATUS OF AN AUTOMATED MULTI-STEP CHANGE-SPEED GEARBOX
DISPOSITIF DE COMMANDE HYDRAULIQUE D'UNE BOÎTE DE VITESSES AUTOMATISÉE À RAPPORT ÉTAGÉS

(30) Priorität: 24.10.2006 DE 102006049972
(43) Veröffentlichungstag der Anmeldung: 02.09.2009
(73) Patentinhaber: ZF Friedrichshafen AG, 88038 Friedrichshafen (DE)
(72) Erfinder: FRITZER, Anton, 88677 Markdorf (DE)
(86) Internationale Anmeldenummer: PCT/EP2007/060816
(87) Internationale Veröffentlichungsnummer: WO 2008/049735

(56) Entgegenhaltungen:
- EP-A- 1 522 754
- WO-A-2004/102042
- DE-A1- 10 347 203

## Beschreibung

Die Erfindung betrifft eine hydraulische Steuerungsvorrichtung eines automatisierten Stufenschaltgetriebes mit mehreren Gangstellzylindern zum Ein- und Auslegen der Gänge des Stufenschaltgetriebes, mit mindestens zwei druckgesteuerten Gangregelventilen zur Steuerung des Arbeitsdruckes in jeweils einem Druckraum der Gangstellzylinder und mit einer Multiplexanordnung mehrerer einfach schaltbarer druckgesteuerter Wahlventile zur Zuordnung der Gangregelventile zu jeweils einem Druckraum der Gangstellzylinder.

Automatisierte Stufenschaltgetriebe sind sowohl in der Bauart eines automatisierten Schaltgetriebes mit einer einzigen Eingangswelle und einer zugeordneten Trennkupplung als auch in der Bauart eines automatisierten Doppelkupplungsgetriebes mit zwei, jeweils einem von zwei Teilgetrieben zugeordneten Eingangswellen sowie mit jeweils einer Trennkupplung pro Eingangswelle in unterschiedlichen Ausführungen seit längerem bekannt und werden teilweise schon seit einigen Jahren in Serienfahrzeugen eingesetzt.

Die Steuerungsvorrichtung eines automatisierten Schaltgetriebes umfasst Stellantriebe, wie Gangsteller zum Ein- und Auslegen der Gänge sowie einen Kupplungssteller zum Schließen und Öffnen der im Kraftfluss zwischen dem Verbrennungsmotor und der Eingangswelle des Schaltgetriebes angeordneten Trennkupplung, sowie Steuerungselemente zur Steuerung dieser Stellantriebe. In ähnlicher Weise umfasst eine Steuerungsvorrichtung eines automatisierten Doppelkupplungsgetriebes für jedes der beiden Teilgetriebe jeweils Stellantriebe, wie Gangsteller zum Ein- und Auslegen der zugeordneten Gänge und einen Kupplungssteller zum Öffnen und Schließen der zugeordneten Trennkupplung sowie Steuerungselemente zur Steuerung der betreffenden Stellantriebe.

Aufgrund einer hohen Energiedichte, guter Steuerungseigenschaften und der Verfügbarkeit technisch ausgereifter Komponenten sind die Steuerungsvorrichtungen automatisierter Schaltgetriebe und automatisierter Doppelkupplungsgetriebe zumeist hydraulisch ausgebildet, wobei die betreffenden Gangsteller und Kupplungssteller als hydraulische Stellzylinder und die zugeordneten Steuerungselemente als hydraulische Schalt- oder Regelventile ausgebildet sind. Die Gangstellzylinder können als einfach wirkende Stellzylinder mit jeweils einem einzigen Druckraum ausgebildet sein, welches zum Ein- und Auslegen von maximal zwei einer Schaltstange zugeordneten Gängen auch zwei Gangstellzylinder pro Schaltstange erfordert. Die Gangstellzylinder können jedoch auch als doppeltwirkende Stellzylinder mit jeweils zwei Druckräumen ausgebildet sein, wodurch zum Ein- und Auslegen von maximal zwei einer Schaltstange zugeordneten Gängen nur ein Gangstellzylinder pro Schaltstange erforderlich ist.

Die Schalt- und Regelventile können als direkt steuerbare Magnetventile ausgeführt sein und in dieser Bauart unmittelbar über jeweils einen elektrischen Steuerstrom angesteuert werden. Da dies aber entsprechend starke Elektromagnete mit relativ großen Abmessungen und hohem Gewicht sowie vergleichsweise hohe elektrische Steuerströme erfordert, sind die Schalt- und Regelventile bevorzugt druckgesteuert ausgebildet und in dieser Bauart durch zumeist als kleinere Magnetventile ausgebildete Vorsteuerventile ansteuerbar. Insbesondere bei schweren Nutzfahrzeugen, die mit einer pneumatischen Druckversorgungseinrichtung zur Energieversorgung einer für diese Fahrzeuggattung vorgeschriebenen Druckspeicher-Bremsanlage ausgerüstet sind, ist alternativ auch eine pneumatische Ausbildung von Steuerungsvorrichtungen entsprechender Stufenschaltgetriebe mit weitgehend identischem Aufbau und gleicher Funktionsweise möglich.

Eine typische hydraulische Steuerungsvorrichtung eines Doppelkupplungsgetriebes ist in der DE 101 34 115 A1 beschrieben. In dieser bekannten Steuerungsvorrichtung ist für jedes der beiden Teilgetriebe ein weitgehend unabhängiger Steuerungszweig vorgesehen. Jeder Steuerungszweig weist jeweils zwei Gangregelventile zur Steuerung der Arbeitsdrücke in jeweils einem Druckraum von zwei zugeordneten, jeweils doppeltwirkend ausgebildeten Gangstellzylindern und ein Kupplungsregelventil zur Steuerung des Arbeitsdruckes in der zugeordneten Trennkupplung auf. Die Gang- und Kupplungsregelventile sind als Magnetregelventile ausgebildet, welches mit den schon genannten Nachteilen eines hohen Bauraumbedarfs und hoher erforderlicher Steuerströme verbunden ist.

Zur Zuordnung der Gangregelventile zu den Druckräumen der betreffenden Gangstellzylinder ist ein Multiplexventil vorgesehen, das als einfach schaltbares Magnetschaltventil mit zwei Schaltstellungen ausgebildet ist. Durch das Multiplexventil werden die Arbeitsdruckleitungen der beiden Gangregelventile wechselweise jeweils mit den beiden Druckräumen eines einzigen Gangstellzylinders des betreffenden Teilgetriebes verbunden. Durch eine mechanische oder hydraulische Kopplung der Ventilabschnitte beider Teilgetriebe erfolgt bei einer Umschaltung des Multiplexventils erfolgt zwangsläufig die Änderung der Zuordnung der Gangregelventile jeweils zugleich in beiden Steuerungszweigen. Durch seine komplizierte Bauweise ist das Multiplexventil entsprechend groß, teuer und störungsanfällig. Des Weiteren sind Schaltungen zwischen zwei Gängen, die eine Umschaltung des Multiplexventils erfordern, mit einer entsprechenden zeitlichen Verzögerung verbunden.

Eine weitere hydraulische Steuerungsvorrichtung eines Doppelkupplungsgetriebes ist in mehreren Ausführungsformen aus der DE 103 47 203 A1 welche zudem alle Merkmale des oberbegriffs des Anspruchs 1 offenbart, bekannt. In einer ersten Ausführungsform dieser Steuerungsvorrichtung gemäß der dortigen Fig. 40 ist ein einziges Gangregelventil mit zwei steuerbaren Arbeitsdruckleitungen zur Steuerung der Arbeitsdrücke von zwei Druckräumen mehrerer Gangstellzylinder vorgesehen. Das Gangregelventil ist vorliegend als ein 4/3-Wege-Magnetregelventil ausgebildet. Für die Zuordnung des Gangregelventils zu den als doppeltwirkende Stellzylinder ausgebildeten Gangstellzylindern beider Teilgetriebe ist eine Multiplexanordnung von einem dem Gangregelventil nachgeschalteten Teilgetriebe-Wahlventil und zwei diesem nachgeschalteten Zylinder-Wahlventilen vorgesehen. Die Wahlventile sind jeweils als einfach schaltbare 8/2-Wege-Druckschaltventile ausgebildet, wobei die Zylinder-Wahlventile jeweils den beiden Gangstellzylindern eines Teilgetriebes zugeordnet sind.

Durch die Schaltstellung des Teilgetriebe-Wahlventils wird die Zuordnung des Gangregelventils zu einem der beiden Teilgetriebe und durch die Schaltstellung des jeweiligen Zylinder-Wahlventils die Zuordnung des Gangregelventils zu einem der beiden Gangstellzylinder des betreffenden Teilgetriebes bestimmt. Für die Ansteuerung des Teilgetriebe-Wahlventils ist diesem ein als ein 3/2-Wege-Magnetschaltventil ausgebildetes Vorsteuerventil vorgeschaltet. Für die Ansteuerung der beiden Zylinder-Wahlventile ist ein gemeinsames, als ein 3/2-Wege-Magnetschaltventil ausgebildetes Vorsteuerventil vorgesehen.

Durch die Verwendung der Multiplexanordnung aus einfach und Platz sparend aufgebauten druckgesteuerten Wahlventilen ergeben sich Kosten- und Bauraumvorteile. Die Verwendung eines einzigen Gangregelventils weist zwar gegenüber der vorgenannten Steuerungsvorrichtung auch Kosten und Bauraumvorteile auf, ist aber aufgrund der gekoppelten Steuerung der Arbeitsdrücke beider Druckräume mit Funktionseinschränkungen sowie aufgrund der elektromagnetischen Steuerung mit gewissen Kosten- und Bauraumnachteilen verbunden.

Durch eine druckgesteuerte Ausführungsvariante des Gangregelventils gemäß der Fig. 42 der DE 103 47 203 A1 ist zumindest der diesbezügliche Kosten- und Bauraumnachteil behoben. Das druckgesteuerte Gangregelventil ist dort mittels eines zugeordneten, als ein Magnetregelventil ausgebildeten Vorsteuerventils ansteuerbar. Durch die Verwendung von zwei druckgesteuerten Gangregelventilen gemäß der dortigen Fig. 43 ist die unabhängige Steuerung der Arbeitsdrücke beider Druckräume möglich, wodurch die Steuerungseigenschaften dieser bekannten Steuerungsvorrichtung verbessert sind. Die beiden druckgesteuerten Gangregelventile sind dort jeweils über ein zugeordnetes, jeweils als ein Magnetregelventil ausgebildetes Vorsteuerventil ansteuerbar.

Trotz der Kosten- und Bauraumvorteile sowie der Funktionsvorteile der letztgenannten Ausführungsform der bekannten Steuerungsvorrichtung besteht ein genereller Bedarf daran, weitere Kosten- und Bauraumeinsparungen sowie Verbesserungen der Funktionseigenschaften an einer derartigen Steuerungsvorrichtung vorzunehmen.

Vor diesem Hintergrund liegt der vorliegenden Erfindung die Aufgabe zugrunde, eine hydraulische Steuerungsvorrichtung eines automatisierten Stufenschaltgetriebes der eingangs genannten Art vorzuschlagen, die bei gleichem Funktionsumfang einen einfacheren und kostengünstigeren Aufbau aufweist und sogar Möglichkeiten zu einer Funktionserweiterung bietet.

Gemäß den Merkmalen des Anspruchs 1 wird diese Aufgabe gelöst durch eine hydraulische Steuerungsvorrichtung eines automatisierten Stufenschaltgetriebes mit mehreren Gangstellzylindern zum Ein- und Auslegen der Gänge des Stufenschaltgetriebes, mit mindestens zwei druckgesteuerten Gangregelventilen zur Steuerung des Arbeitsdruckes in jeweils einem Druckraum der Gangstellzylinder und mit einer Multiplexanordnung mehrerer einfach schaltbarer druckgesteuerter Wahlventile zur Zuordnung der Gangregelventile zu jeweils einem Druckraum der Gangstellzylinder. Außerdem ist vorgesehen, dass mindestens ein gemeinsames, als Regelventil ausgebildetes Vorsteuerventil zur Ansteuerung eines der Gangregelventile und mindestens eines der Wahlventile vorgesehen ist, wobei das Vorsteuerventil einen den Schaltdruck des mindestens einen Wahlventils enthaltenden ersten Steuerdruckbereich und einen den Regelbereich des Gangregelventils enthaltenden zweiten Steuerdruckbereich aufweist.

Vorteilhafte Ausgestaltungen und Weiterbildungen der erfindungsgemäßen hydraulischen Steuerungsvorrichtung sind Gegenstand der abhängigen Ansprüche.

Durch die Verwendung eines gemeinsamen Vorsteuerventils zur Ansteuerung eines Gangregelventils und mindestens eines Wahlventils wird ein zumeist als Magnetschaltventil ausgebildetes Vorsteuerventil, das üblicherweise zur Ansteuerung eines Wahlventils verwendet wird, vorteilhaft eingespart. Bei einer hydraulischen Steuerungsvorrichtung eines Doppelkupplungsgetriebes, wie sie beispielsweise aus der DE 103 47 203 A1 bekannt ist, können somit mindestens zwei als Magnetschaltventile ausgebildete Vorsteuerventile eingespart werden. Dabei kann eine Beeinträchtigung des Funktionsumfangs der Steuerungsvorrichtung durch eine weitgehende Trennung der Schaltfunktion und der Regelfunktion des gemeinsamen Vorsteuerventils vermieden werden.

Hierzu ist bevorzugt vorgesehen, dass der erste Steuerdruckbereich des Vorsteuerventils unterhalb des zweiten Steuerdruckbereiches liegt, dass der Schaltdruck des mindestens einen Wahlventils in etwa mittig innerhalb des ersten Steuerdruckbereiches liegt, und dass der Regelbereich des Gangregelventils weitgehend identisch mit dem zweiten Steuerdruckbereich ist. Somit ergeben sich für das gemeinsame Vorsteuerventil drei Betriebsbereiche, ein erster Betriebsbereich, in dem das zugeordnete Wahlventil nicht umgeschaltet ist und das zugeordnete Gangregelventil seinen Regelbereich noch nicht erreicht hat, ein zweiter Betriebsbereich, in dem das zugeordnete Wahlventil umgeschaltet ist und das zugeordnete Gangregelventil seinen Regelbereich noch nicht erreicht hat, und ein dritter Betriebsbereich, in dem das zugeordnete Wahlventil umgeschaltet ist und sich das zugeordnete Gangregelventil innerhalb seines Regelbereiches befindet. Hieraus ergeben sich vielfältige Anwendungsmöglichkeiten, die später noch ausführlich beschrieben werden.

Um den Beginn des Regelbereiches des Gangregelventils zu einem höheren Steuerdruck des Vorsteuerventils zu verschieben bzw. dort fest einzustellen, weist das Gangregelventil zweckmäßig eine entsprechend vorgespannte Ventilfeder auf. Hierdurch verschlechtert sich bei gegebenem Reduzierdruck zwar die Auflösung des Vorsteuerventils über den Regelbereich des Gangregelventils. Der Regelbereich des Gangregelventils bleibt aber in vollem Umfang erhalten.

Das Vorsteuerventil ist bevorzugt als ein Magnetregelventil, beispielsweise als ein 3/2-Wege-Magnetregelventil oder als ein 3/3-Wege-Magnetregelventil, mit einem Anschluss einer einen eingangsseitigen Steuerdruck führenden Steuerdruck-Versorgungsleitung, einem Steueranschluss einer zu einem zugeordneten Gangregelventil führenden Steuerdruckleitung und einer zu einem zugeordneten Wahlventil führenden Schaltdruckleitung, sowie mit einem Anschluss einer Drucklosleitung ausgebildet.

Zur Vermeidung einer gegenseitigen Störung oder Verhinderung der Schaltfunktion und der Regelfunktion des gemeinsamen Vorsteuerventils sind das Gangregelventil und das mindestens eine Wahlventil verschiedenen Schaltstangen oder verschiedenen Teilgetrieben zugeordnet.

In einer ersten bevorzugten Ausführungsvariante der erfindungsgemäßen Steuerungsvorrichtung, die für ein automatisiertes Schaltgetriebe oder für ein Teilgetriebe eines automatisierten Doppelkupplungsgetriebes mit zwei Schaltstangen, also mit zwei doppeltwirksamen Gangstellzylindern mit jeweils zwei Druckräumen oder mit vier einfachwirksamen Gangstellzylindern mit jeweils einem Druckraum verwendet werden kann, ist eine Schaltungsanordnung mit zwei Gangregelventilen, zwei Wahlventilen und zwei Vorsteuerventilen vorgesehen, bei der jeweils zwei Druckräume wechselweise über jeweils eines der Wahlventile mit der Arbeitsdruckleitung eines zugeordneten Gangregelventils oder mit einer Drucklosleitung verbindbar sind. Dabei sind der Steuerdruckraum des jeweiligen Gangregelventils über eine Steuerdruckleitung sowie der Schaltdruckraum des dem jeweils anderen Gangregelventil zugeordneten Wahlventils über eine Schaltdruckleitung jeweils mit dem Steueranschluss eines gemeinsamen Vorsteuerventils verbunden. Dadurch ist eine weitgehend unabhängige Umschaltung der beiden Wahlventile sowie Regelung der beiden Gangregelventile gegeben.

Steht bei dem betreffenden Stufenschaltgetriebe eine schnelle Schaltung zwischen zwei bestimmten, einer gemeinsamen Schaltstange zugeordneten Gängen im Vordergrund, so sind die beiden bei nicht-umgeschalteten Wahlventilen mit den Gangregelventilen verbundenen Druckräume und die beiden bei umgeschalteten Wahlventilen mit den Gangregelventilen verbundenen Druckräume jeweils einer gemeinsamen Schaltstange zugeordnet.

Hierdurch ist es möglich, an der betreffenden Schaltstange, der die bei umgeschalteten Wahlventilen mit den Gangregelventilen verbundenen Druckräume zugeordnet sind, zeitgleich mittels des einen Gangregelventils den Arbeitsdruck zum Auslegen des eingelegten Lastgangs und zum Synchronisieren sowie Einlegen des einzulegenden Zielgangs zu regeln, und mittels des anderen Gangregelventils zur Vermeidung einer zu hohen mechanischen Belastung der betreffenden Bauteile den Arbeitsdruck zum Abbremsen der Schaltstange zu regeln.

Steht bei dem betreffenden Stufenschaltgetriebe dagegen eine schnelle Schaltung zwischen zwei bestimmten, verschiedenen Schaltstangen zugeordneten Gängen im Vordergrund, so sind die beiden bei nicht-umgeschalteten Wahlventilen mit den Gangregelventilen verbundenen Druckräume und die beiden bei umgeschalteten Wahlventilen mit den Gangregelventilen verbundenen Druckräume jeweils verschiedenen Schaltstangen zugeordnet.

Hierdurch ist es möglich, fast zeitgleich durch eine Regelung des Arbeitsdruckes in dem betreffenden einen Druckraum über das eine Gangregelventil den eingelegten Lastgang auszulegen und durch eine Regelung des Arbeitsdruckes in dem betreffenden anderen Druckraum über das andere Gangregelventil den einzulegenden Zielgang teilweise zeitlich überschnitten schnell einzulegen.

In einer zweiten bevorzugten Ausführungsvariante der erfindungsgemäßen Steuerungsvorrichtung, die für ein automatisiertes Doppelkupplungsgetriebe mit vier Schaltstangen, also mit vier doppeltwirksamen Gangstellzylindern mit jeweils zwei Druckräumen oder mit acht einfachwirksamen Gangstellzylindern mit jeweils einem Druckraum, verwendet werden kann, ist eine Schaltungsanordnung mit drei Gangregelventilen, drei Wahlventilen und drei Vorsteuerventilen vorgesehen, bei der über ein erstes Wahlventil die beiden Arbeitsdruckleitungen eines ersten Gangregelventils und eines zweiten Gangregelventils jeweils wechselweise mit einem zugeordneten Druckraum oder mit einer jeweils zu einem anderen Wahlventil führenden Verbindungsleitung verbindbar sind, bei der über ein zweites Wahlventil die von dem ersten Wahlventil kommende Verbindungsleitung wechselweise mit zwei verschiedenen Druckräumen verbindbar ist, und bei der über ein drittes Wahlventil die Arbeitsdruckleitung eines dritten Gangregelventils und die von dem ersten Wahlventil kommende Verbindungsleitung jeweils wechselweise mit zwei verschiedenen Druckräumen verbindbar sind. Der Steuerdruckraum des ersten Gangregelventils und der Schaltdruckraum des dritten Wahlventils sind zudem mit dem Steueranschluss eines gemeinsamen ersten Vorsteuerventils verbunden, ein Steuerdruckraum des zweiten Gangregelventils und ein Schaltdruckraum des zweiten Wahlventils sind mit dem Steueranschluss eines gemeinsamen zweiten Vorsteuerventils verbunden, und der Steuerdruckraum des dritten Gangregelventils und der Schaltdruckraum des ersten Wahlventils sind mit dem Steueranschluss eines gemeinsamen dritten Vorsteuerventils verbunden.

Hieraus ergeben sich drei Schaltstellungen der Wahlventile, in denen jeweils zwei Druckräume durch zwei Gangregelventile unabhängig voneinander gleichzeitig regelbar sind, und eine Schaltstellung der Wahlventile, in der drei Druckräume durch alle drei Gangregelventile unabhängig voneinander gleichzeitig regelbar sind.

Um den Vorteil dieser Ausführungsvariante der erfindungsgemäßen Steuerungsvorrichtung optimal ausnutzen zu können, ist zweckdienlich vorgesehen, dass die zwei Druckräume, deren Arbeitsdrücke in entsprechenden Schaltstellungen der Wahlventile jeweils gleichzeitig regelbar sind, jeweils einer gemeinsamen Schaltstange zugeordnet sind. Zudem kann vorgesehen sein, dass die drei Druckräume, deren Arbeitsdrücke in einer entsprechenden Schaltstellung der Wahlventile gleichzeitig regelbar sind, den im Fahrbetrieb häufig im schnellen Wechsel geschalteten Gängen, vorzugsweise dem ersten Gang G1, dem zweiten Gang G2 und dem Rückwärtsgang R, zugeordnet sind.

Zur Verdeutlichung der Erfindung ist der Beschreibung eine Zeichnung mit Ausführungsbeispielen beigefügt.
In diesen zeigt
- Fig. 1: eine erfindungsgemäße Ausführungsform einer hydraulischen Steuerungsvorrichtung für ein automatisiertes Stufenschaltgetriebe oder ein Teilgetriebe eines automatisierten Stufenschaltgetriebes mit zwei Schaltstangen in Form eines schematischen Schaltplans,
- Fig. 2: ein Steuerungsschema der Steuerungsvorrichtung nach Fig. 1 in Form einer Tabelle,
- Fig. 3: ein Diagramm zur Veranschaulichung der Wirkungsweise eines Vorsteuerventils der Steuerungsvorrichtung gemäß Fig. 1,
- Fig. 4: eine erfindungsgemäße Ausführungsvariante einer hydraulischen Steuerungsvorrichtung eines automatisierten Stufenschaltgetriebes mit vier Schaltstangen in Form eines schematischen Schaltplans,
- Fig. 5: ein Steuerungsschema der Steuerungsvorrichtung nach Fig. 4 in Form einer Tabelle und
- Fig. 6: eine bekannte hydraulische Steuerungsvorrichtung eines automatisierten Doppelkupplungsgetriebes mit vier Schaltstangen in Form eines schematischen Schaltplans.

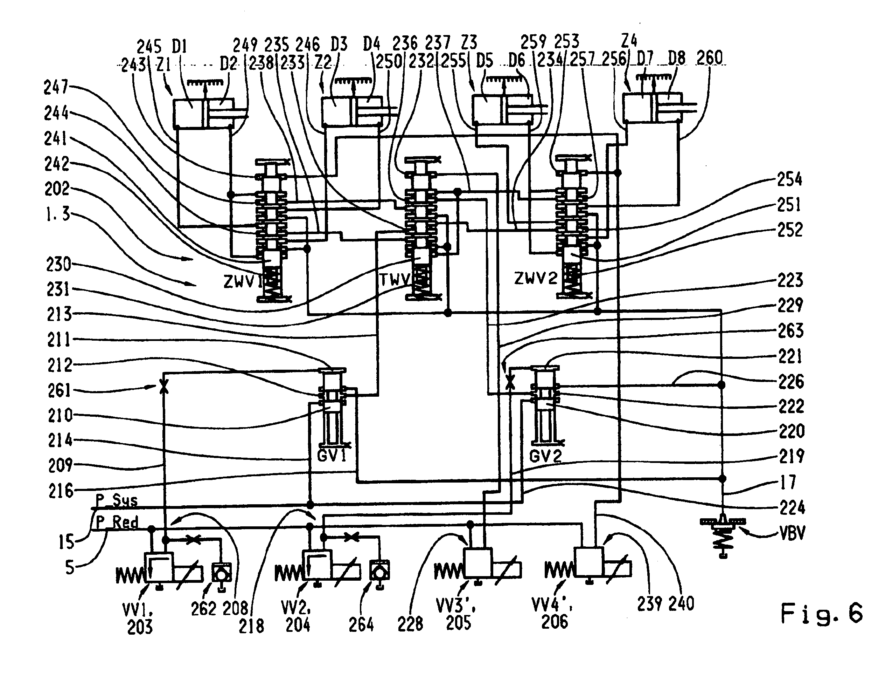

Eine bekannte hydraulische Steuerungsvorrichtung 1.3 eines Doppelkupplungsgetriebes, die dem getriebeseitigen Teil einer in der DE 103 47 203 A1 nach der dortigen Fig. 43 beschriebenen Ausführungsform einer Steuerungsvorrichtung entspricht, weist gemäß Fig. 6 vier doppeltwirkende Gangstellzylinder Z1 - Z4 mit jeweils zwei Druckräumen D1 - D8 zum Ein- und Auslegen zugeordneter Gänge G1 - G7 und R, zwei druckgesteuerte Gangregelventile GV1, GV2 zur Regelung des Arbeitsdruckes in zwei der Druckräume D1 - D8, eine Multiplexanordnung 202 mit einem druckgesteuerten Teilgetriebe-Wahlventil TWV und zwei druckgesteuerten Zylinder-Wahlventilen ZWV1, ZWV2 zur selektiven Zuordnung der beiden Gangregelventile GV1, GV2 zu zwei der acht Druckräume D1 - D8, sowie zwei, jeweils als ein Magnetregelventil 203, 204 ausgebildete Vorsteuerventile W1, W2 zur Ansteuerung der beiden Gangregelventile GV1, GV2, und zwei, jeweils als ein Magnetschaltventil 205, 206 ausgebildete Vorsteuerventile W3', W4' zur Ansteuerung der Wahlventile TWV, ZWV1, ZWV2 auf.

Das erste Vorsteuerventil W1, das beispielsweise als ein 3/2-Wege-Magnetregelventil oder als ein 3/3-Wege-Magnetregelventil ausgebildet sein kann, weist einen Anschluss einer einen Reduzierdruck P_Red führenden Steuerdruck-Versorgungsleitung 5, einen Steueranschluss 208 einer zu dem ersten Gangregelventil GV1 führenden Steuerdruckleitung 209 und einen Anschluss einer nicht näher dargestellten Drucklosleitung auf.

Das erste Gangregelventil GV1 ist als ein Schieberventil mit einem Ventilkolben 210 ausgebildet. Die Steuerdruckleitung 209 des zugeordneten ersten Vorsteuerventils W1 ist an einen stirnseitigen Steuerdruckraum 211 des ersten Gangregelventils GV1 angeschlossen. Ein mittiger Druckraum 212 des ersten Gangregelventils GV1 steht über eine Arbeitsdruckleitung 213 mit dem Teilgetriebe-Wahlventil TWV in Verbindung. Durch die Steuerkanten benachbarter Steuerbunde des Ventilkolbens 210 ist der mittige Druckraum 212 und damit die Arbeitsdruckleitung 213 regelbar mit einer Druckleitung 214, die von einer einen Systemdruck P_Sys führenden Versorgungsdruckleitung 15 abzweigt, und mit einer Drucklosleitung 216, die zu einer Sammelleitung 17 führt, verbindbar. Somit wird ein durch das Vorsteuerventil W1 in der Steuerdruckleitung 209 eingestellter Vorsteuerdruck durch das Gangregelventil GV1 proportional in einen in der Arbeitsdruckleitung 213 wirksamen Arbeitsdruck umgesetzt.

Das zweite Vorsteuerventil W2, das bevorzugt baugleich zu dem ersten Vorsteuerventil W1 ausgeführt ist, weist einen Anschluss der den Reduzierdruck P_Red führenden Steuerdruck-Versorgungsleitung 5, einen Steueranschluss 218 einer zu dem zweiten Gangregelventil GV2 führenden Steuerdruckleitung 219 und einen Anschluss einer nicht näher dargestellten Drucklosleitung auf.

Das zweite Gangregelventil GV2 ist baugleich mit dem ersten Gangregelventil GV1 als ein Schieberventil mit einem Ventilkolben 220 ausgebildet. Die Steuerdruckleitung 219 des zugeordneten zweiten Vorsteuerventils W2 ist an einen stirnseitigen Steuerdruckraum 221 des zweiten Gangregelventils GV2 angeschlossen. Ein mittiger Druckraum 222 des zweiten Gangregelventils GV2 steht über eine Arbeitsdruckleitung 223 mit dem Teilgetriebe-Wahlventil TWV in Verbindung. Durch die Steuerkanten benachbarter Steuerbunde des Ventilkolbens 220 ist der mittige Druckraum 222 und damit die Arbeitsdruckleitung 223 regelbar mit einer von der Versorgungsdruckleitung 15 abzweigenden Druckleitung 224 und mit einer zu der Sammelleitung 17 führenden Drucklosleitung 226 verbindbar. Somit wird ein durch das Vorsteuerventil VV2 in der Steuerdruckleitung 219 eingestellter Vorsteuerdruck durch das Gangregelventil GV2 proportional in einen in der Arbeitsdruckleitung 223 wirksamen Arbeitsdruck umgesetzt.

Das dritte Vorsteuerventil VV3' weist einen Anschluss der den Reduzierdruck P_Red führenden Steuerdruck-Versorgungsleitung 5, einen Steueranschluss 228 einer zu dem Teilgetriebe-Wahlventil TWV führenden Schaltdruckleitung 229 und einen Anschluss einer nicht näher dargestellten Drucklosleitung auf.

Das Teilgetriebe-Wahlventil TWV ist als ein Schieberschaltventil mit einem Ventilkolben 230 und einer Ventilfeder 231 ausgebildet. Die Schaltdruckleitung 229 des zugeordneten dritten Vorsteuerventils W3' ist an einen der Ventilfeder 231 abgewandten stirnseitigen Schaltdruckraum 232 des Teilgetriebe-Wahlventils TWV angeschlossen. An einen ersten mittigen Druckraum 233 des Teilgetriebe-Wahlventils TWV ist die Arbeitsdruckleitung 213 des ersten Gangregelventils GV1 angeschlossen. Durch die Steuerkanten benachbarter Steuerbunde des Ventilkolbens 230 ist dieser Druckraum 233 und damit die Arbeitsdruckleitung 213 wechselweise mit einer zu dem zweiten Zylinder-Wahlventil ZWV2 führenden ersten Verbindungsleitung 234 oder mit einer zu dem ersten Zylinder-Wahlventil ZWV1 führenden ersten Verbindungsleitung 235 verbindbar.

An einen zweiten mittigen Druckraum 236 des Teilgetriebe-Wahlventils TWV ist die Arbeitsdruckleitung 223 des zweiten Gangregelventils GV2 angeschlossen. Durch die Steuerkanten benachbarter Steuerbunde des Ventilkolbens 230 ist dieser Druckraum 236 und damit die Arbeitsdruckleitung 223 wechselweise mit einer zu dem zweiten Zylinder-Wahlventil ZWV2 führenden zweiten Verbindungsleitung 237 oder mit einer zu dem ersten Zylinder-Wahlventil ZWV1 führenden zweiten Verbindungsleitung 238 verbindbar.

Somit werden die in den Arbeitsdruckleitungen 213, 223 der beiden Gangregelventile GV1, GV2 wirksamen Arbeitsdrücke über das Teilgetriebe-Wahlventil TWV wechselweise zu dem ersten Zylinder-Wahlventil ZWV1 oder dem zweiten Zylinder-Wahlventil ZWV2 durchgeschaltet, vorliegend bei nicht-umgeschaltetem Teilgetriebe-Wahlventil TWV zu dem zweiten Zylinder-Wahlventil ZWV2 und bei umgeschaltetem Teilgetriebe-Wahlventil TWV zu dem ersten Zylinder-Wahlventil ZWV1.

Das vierte Vorsteuerventil VV4' weist einen Anschluss der den Reduzierdruck P_Red führenden Steuerdruck-Versorgungsleitung 5, einen Steueranschluss 239 einer zu den beiden Zylinder-Wahlventilen ZWV1, ZWV2 führenden Schaltdruckleitung 240 und einen Anschluss einer nicht näher dargestellten Drucklosleitung auf.

Das erste Zylinder-Wahlventil ZWV1 ist als ein Schieberschaltventil mit einem Ventilkolben 241 und einer Ventilfeder 242 ausgebildet. Die Schaltdruckleitung 240 des zugeordneten vierten Vorsteuerventils VV4' ist an einen der Ventilfeder 242 abgewandten stirnseitigen Schaltdruckraum 243 des ersten Zylinder-Wahlventils ZWV1 angeschlossen. An einen ersten mittigen Druckraum 244 dieses Zylinder-Wahlventils ZWV1 ist die von dem Teilgetriebe-Wahschaltventil TWV kommende erste Verbindungsleitung 235 angeschlossen.

Durch die Steuerkanten benachbarter Steuerbunde des Ventilkolbens 241 ist dieser Druckraum 244 und damit die erste Verbindungsleitung 235 wechselweise mit einer zu dem ersten Druckraum D1 des ersten Gangstellzylinders Z1 führenden Anschlussleitung 245 oder mit einer zu dem ersten Druckraum D3 des zweiten Gangstellzylinders Z2 führenden Anschlussleitung 246 verbindbar.

An einen zweiten mittigen Druckraum 247 des ersten Zylinder-Wahlventils ZWV1 ist die von dem Teilgetriebe-Wahschaltventil TWV kommende zweite Verbindungsleitung 238 angeschlossen. Durch die Steuerkanten benachbarter Steuerbunde des Ventilkolbens 241 ist dieser Druckraum 247 und damit die zweite Verbindungsleitung 238 wechselweise mit einer zu dem zweiten Druckraum D2 des ersten Gangstellzylinders Z1 führenden Anschlussleitung 249 oder mit einer zu dem zweiten Druckraum D4 des zweiten Gangstellzylinders Z2 führenden Anschlussleitung 250 verbindbar.

Somit werden die beiden von dem Teilgetriebe-Wahlventil TWV kommenden Verbindungsleitungen 235 bzw. 238, die in der umgeschalteten Schaltstellung des Teilgetriebe-Wahlventils TWV die in den Arbeitsdruckleitungen 213, 223 der beiden Gangregelventile GV1, GV2 wirksamen Arbeitsdrücke führen, über das Zylinder-Wahlventil ZWV1 wechselweise zu den beiden Druckräumen D1 bzw. D2 des ersten Gangstellzylinders Z1 oder zu den beiden Druckräumen D3 bzw. D4 des zweiten Gangstellzylinders Z2 durchgeschaltet. Vorliegend erfolgt dies bei nicht-umgeschaltetem Zylinder-Wahlventil ZWV1 zu den Druckräumen D1 bzw. D2 des ersten Gangstellzylinders Z1 und bei umgeschaltetem Zylinder-Wahlventil ZWV1 zu den Druckräumen D3 bzw. D4 des zweiten Gangstellzylinders Z2.

Das zweite Zylinder-Wahlventil ZWV2 ist baugleich zu dem ersten Zylinder-Wahlventil ZWV1 ausgebildet und weist ebenfalls einen Ventilkolben 251 und eine Ventilfeder 252 auf. Die Schaltdruckleitung 240 des zugeordneten vierten Vorsteuerventils W4' ist an einen von der Ventilfeder 252 abgewandten stirnseitigen Schaltdruckraum 253 des zweiten Zylinder-Wahlventils ZWV2 angeschlossen. An einen ersten mittigen Druckraum 254 dieses Zylinder-Wahlventils ZWV2 ist die von dem Teilgetriebe-Wahschaltventil TWV kommende erste Verbindungsleitung 234 angeschlossen. Durch die Steuerkanten benachbarter Steuerbunde des Ventilkolbens 251 ist dieser Druckraum 254 und damit die erste Verbindungsleitung 234 wechselweise mit einer zu dem ersten Druckraum D5 des dritten Gangstellzylinders Z3 führenden Anschlussleitung 255 oder mit einer zu dem ersten Druckraum D7 des vierten Gangstellzylinders Z4 führenden Anschlussleitung 256 verbindbar.

An einen zweiten mittigen Druckraum 257 des zweiten Zylinder-Wahlventils ZWV2 ist die von dem Teilgetriebe-Wahlventil TWV kommende zweite Verbindungsleitung 237 angeschlossen. Durch die Steuerkanten benachbarter Steuerbunde des Ventilkolbens 251 ist dieser Druckraum 257 und damit die zweite Verbindungsleitung 237 wechselweise mit einer zu dem zweiten Druckraum D6 des dritten Gangstellzylinders Z3 führenden Anschlussleitung 259 oder mit einer zu dem zweiten Druckraum D8 des vierten Gangstellzylinders Z4 führenden Anschlussleitung 260 verbindbar.

Somit werden die beiden von dem Teilgetriebe-Wahlventil TWV kommenden Verbindungsleitungen 234 bzw. 237, die in der nicht-umgeschalteten Schaltstellung des Teilgetriebe-Wahlventils TWV die in den Arbeitsdruckleitungen 213 bzw. 223 der beiden Gangregelventile GV1 bzw. GV2 wirksamen Arbeitsdrücke führen, über das Zylinder-Wahlventil ZWV2 wechselweise zu den beiden Druckräumen D5, D6 des dritten Gangstellzylinders Z3 oder zu den beiden Druckräumen D7, D8 des vierten Gangstellzylinders Z4 durchgeschaltet, vorliegend bei nicht-umgeschaltetem Zylinder-Wahlventil ZWV2 zu den Druckräumen D5, D6 des dritten Gangstellzylinders Z3 und bei umgeschaltetem Zylinder-Wahlventil ZWV2 zu den Druckräumen D7, D8 des vierten Gangstellzylinders Z4.

Die in den beiden Schaltstellungen des Teilgetriebe-Wahlventils TWV jeweils abgesperrten Verbindungsleitungen 234, 235, 237, 238 sowie die in den beiden Schaltstellungen der beiden Zylinderwahlventile ZWV1, ZWV2 jeweils abgesperrten Anschlussleitungen 245, 246, 249, 250 bzw. 255, 256, 259, 260 sind dann jeweils über eine Verbindung mit der Sammelleitung 17 drucklos geschaltet. Diese Sammelleitung 17 steht über ein Vorbefüllungsventil VBV, durch das ein Leerlaufen der Druckräume D1 - D8 und der betreffenden Leitungen verhindert wird, mit einem nicht näher dargestellten Ölsumpf in Verbindung.

Zum Ausgleich und zur Dämpfung von Druckschwankungen sind die Steuerdruckleitungen 209, 219 der beiden Gangregelventile GV1, GV2 jeweils mit einer eingebauten Drossel 261, 263 und jeweils mit einem angeschlossenen Druckspeicher 262, 264 versehen.

Bei dieser bekannten Steuerungsvorrichtung 1.3 ist der Aufwand an Bauteilen, insbesondere an den vergleichsweise teuren Magnetventilen 203 - 206, relativ groß, und die Steuerungsmöglichkeiten sind vergleichsweise gering.

Es wird daher gemäß der Erfindung vorgeschlagen, die Regelfunktion zur Ansteuerung eines Gangregelventils GV1, GV2 und die Schaltfunktion zur Ansteuerung mindestens eines Wahlventils TWV, ZWV1, ZWV2 in einem gemeinsamen, als Regelventil ausgebildeten Vorsteuerventil W1, W2 zusammenzufassen. Dieses Vorsteuerventil VV1, VV2 weist einen ersten Steuerdruckbereich ΔP_B1, der den Schaltdruck P_S des mindestens einen Wahlventils TWV, ZWV1, ZWV2 enthält, und einen zweiten Steuerdruckbereich ΔP_B2 auf, der den Regelbereich ΔP_R des zugeordneten Gangregelventils GV1, GV2 enthält.

Um steuerungstechnisch eine weitgehende Trennung der beiden Steuerungsfunktionen des gemeinsamen Vorsteuerventils VV1, VV2 zu erreichen, liegt der erste Steuerdruckbereich ΔP_B1 unterhalb des zweiten Steuerdruckbereiches ΔP_B2, und der Schaltdruck P_S des mindestens einen Wahlventils TWV, ZWV1, ZWV2 liegt in etwa mittig innerhalb des ersten Steuerdruckbereiches ΔP_B1. Der Regelbereich ΔP_R des Gangregelventils GV1, GV2 ist zur Erzielung einer größtmöglichen Auflösung vorteilhaft weitgehend identisch mit dem zweiten Steuerdruckbereich ΔP_B2.

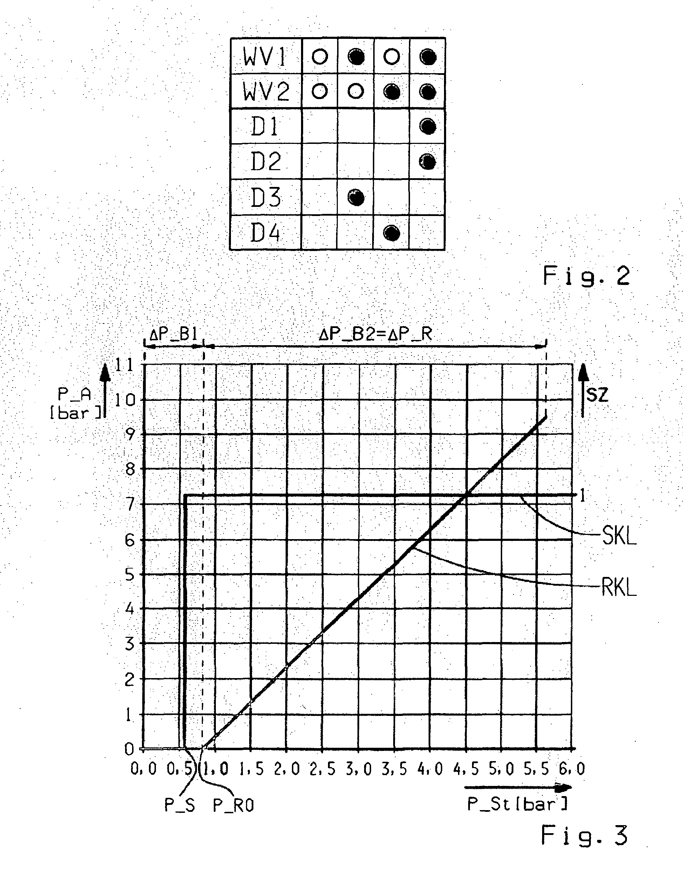

Dieser Zusammenhang ist in dem Diagramm von Fig. 3 veranschaulicht, in dem der durch das zugeordnete Gangregelventil GV1, GV2 einstellbare Arbeitsdruck P_A über dem durch das Vorsteuerventil einstellbaren Steuerdruck P_St dargestellt ist. Der Beginn P_R0 des Regelbereiches ΔP_R ist von dem Wert P_St = 0 zu einem höheren Wert verschoben, wodurch eine zugeordnete Regelkennlinie RKL bei gegebenem Reduzierdruck P_Red kürzer und steiler ist als dies ohne die Schaltfunktion der Fall wäre, wodurch die Auflösung der Regelfunktion entsprechend kleiner ist.

Die Schaltfunktion wird, wie in Fig. 3 mittels einer Schaltkennlinie SKL veranschaulicht ist, mit Überschreiten bzw. Unterschreiten des Schaltdruckes P_S ausgeführt, also unterhalb des Schaltdruckes P_S befindet sich das zugeordnete Wählventil TWV, ZWV1, ZWV2 im nicht-umgeschalteten Schaltzustand SZ = 0 und oberhalb des Schaltdruckes P_S im umgeschalteten Schaltzustand SZ = 1, welches auf der rechten Seite des Diagramms ablesbar ist.

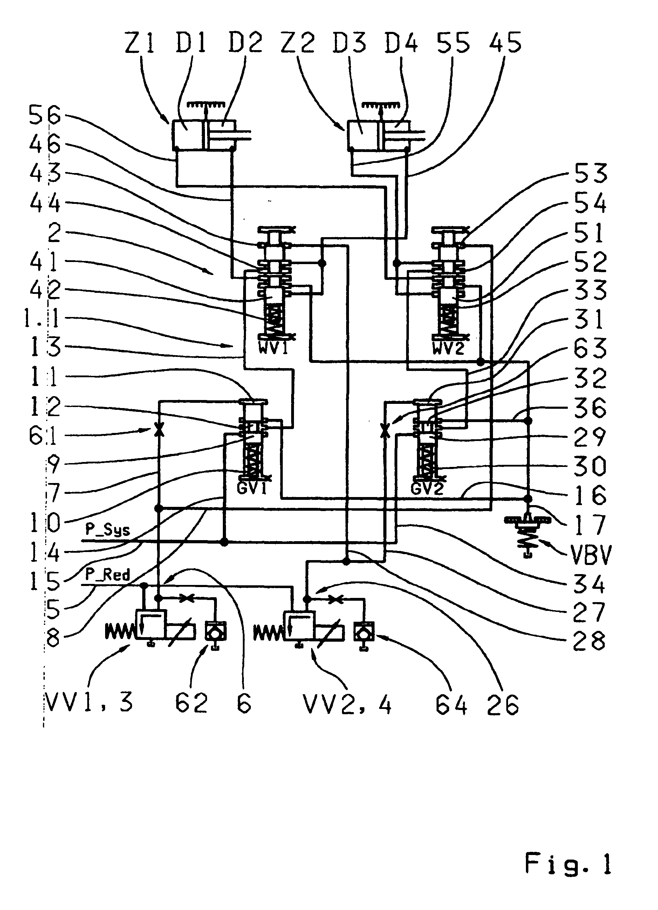

Ein erstes Anwendungsbeispiel von zwei derartigen Vorsteuerventilen mit einer kombinierten Regel- und Schaltfunktion ist in einer erfindungsgemäßen hydraulischen Steuerungsvorrichtung 1.1 gemäß Fig. 1 dargestellt, die bei einem automatisierten Schaltgetriebe oder bei einem Teilgetriebe eines automatisierten Doppelkupplungsgetriebes anwendbar ist. Diese Steuerungsvorrichtung 1.1 umfasst zwei doppeltwirksame Gangstellzylinder Z1, Z2 mit jeweils zwei Druckräumen D1 - D4, zwei druckgesteuerte Gangregelventile GV1, GV2 zur Regelung des Arbeitsdruckes in jeweils zwei der Druckräume D1 - D4, eine Multiplexanordnung 2 aus zwei druckgesteuerten Wahlventilen WV1, WV2 zur selektiven Zuordnung der beiden Gangregelventile GV1, GV2 zu maximal zwei der vier Druckräume D1 - D4 und zwei als Magnetregelventile 3, 4 ausgebildete Vorsteuerventile VV1, VV2 zur kombinierten Ansteuerung der beiden Gangregelventile GV1 bzw. GV2 und der beiden Wahlventile WV1 bzw. WV2.

Das erste Vorsteuerventil VV1, das beispielsweise als ein 3/2-Wege-Magnetregelventil oder als ein 3/3-Wege-Magnetregelventil ausgebildet sein kann, weist einen Anschluss einer einen Reduzierdruck P_Red führenden Steuerdruck-Versorgungsleitung 5, einen Steueranschluss 6 einer zu dem ersten Gangregelventil GV1 führenden Steuerdruckleitung 7 und einer zu dem zweiten Wahlventil WV2 führenden Schaltdruckleitung 8 sowie einen Anschluss einer nicht näher dargestellten Drucklosleitung auf.

Das erste Gangregelventil GV1 ist als ein Schieberventil mit einem Ventilkolben 9 und einer Ventilfeder 10 ausgebildet. Die Steuerdruckleitung 7 des zugeordneten ersten Vorsteuerventils W1 ist an einen der Ventilfeder 10 abgewandten stirnseitigen Steuerdruckraum 11 des ersten Gangregelventils GV1 angeschlossen. Ein mittiger Druckraum 12 des ersten Gangregelventils GV1 steht über eine Arbeitsdruckleitung 13 mit dem ersten Wahlventil WV1 in Verbindung. Durch die Steuerkanten benachbarter Steuerbunde des Ventilkolbens 9 ist der mittige Druckraum 12 und damit die Arbeitsdruckleitung 13 regelbar mit einer Druckleitung 14, die von einer einen Systemdruck P_Sys führenden Versorgungsdruckleitung 15 abzweigt, sowie mit einer Drucklosleitung 16, die zu einer Sammelleitung 17 führt, verbindbar. Somit wird ein durch das Vorsteuerventil W1 in der Steuerdruckleitung 7 eingestellter Vorsteuerdruck durch das Gangregelventil GV1 proportional in einen in der Arbeitsdruckleitung 13 wirksamen Arbeitsdruck umgesetzt.

Das zweite Vorsteuerventil VV2, das bevorzugt baugleich zu dem ersten Vorsteuerventil VV1 ausgeführt ist, weist einen Anschluss der den Reduzierdruck P_Red führenden Steuerdruck-Versorgungsleitung 5, einen Steueranschluss 26 einer zu dem zweiten Gangregelventil GV2 führenden Steuerdruckleitung 27 und einer zu dem ersten Wahlventil WV1 führenden Schaltdruckleitung 28 sowie einen Anschluss einer nicht näher dargestellten Drucklosleitung auf.

Das zweite Gangregelventil GV2 ist baugleich mit dem ersten Gangregelventil GV1 als ein Schieberventil mit einem Ventilkolben 29 und einer Ventilfeder 30 ausgebildet. Die Steuerdruckleitung 27 des zugeordneten zweiten Vorsteuerventils VV2 ist an einen von der Ventilfeder 30 abgewandten stirnseitigen Steuerdruckraum 31 des zweiten Gangregelventils GV2 angeschlossen. Ein mittiger Druckraum 32 des zweiten Gangregelventils GV2 steht über eine Arbeitsdruckleitung 33 mit dem zweiten Wahlventil WV2 in Verbindung. Durch die Steuerkanten benachbarter Steuerbunde des Ventilkolbens 29 ist der mittige Druckraum 32 und damit die Arbeitsdruckleitung 33 regelbar mit einer von der Versorgungsdruckleitung 15 abzweigenden Druckleitung 34 und mit einer zu der Sammelleitung 17 führenden Drucklosleitung 36 verbindbar. Somit wird ein durch das Vorsteuerventil VV2 in der Steuerdruckleitung 27 eingestellter Vorsteuerdruck durch das Gangregelventil GV2 proportional in einen in der Arbeitsdruckleitung 33 wirksamen Arbeitsdruck umgesetzt.

Das erste Wahlventil WV1 ist als ein Schieberschaltventil mit einem Ventilkolben 41 und einer Ventilfeder 42 ausgebildet. Die Schaltdruckleitung 28 des zugeordneten zweiten Vorsteuerventils VV2 ist an einen von der Ventilfeder 42 abgewandten stirnseitigen Schaltdruckraum 43 des ersten Wahlventils WV1 angeschlossen. An einen mittigen Druckraum 44 dieses Wahlventils WV1 ist die von dem ersten Gangregelventil GV1 kommende Arbeitsdruckleitung 13 angeschlossen. Durch die Steuerkanten benachbarter Steuerbunde des Ventilkolbens 41 ist dieser Druckraum 44 und damit die Arbeitsdruckleitung 13 wechselweise mit einer zu dem zweiten Druckraum D4 des zweiten Gangstellzylinders Z2 führenden Anschlussleitung 45 oder mit einer zu dem zweiten Druckraum D2 des ersten Gangstellzylinders Z1 führenden Anschlussleitung 46 verbindbar.

Somit wird die von dem ersten Gangregelventil GV1 kommende Arbeitsdruckleitung 13 über das erste Wahlventil WV1 wechselweise zu dem zweiten Druckraum D2 des ersten Gangstellzylinders Z1 oder zu dem zweiten Druckraum D4 des zweiten Gangstellzylinders Z2 durchgeschaltet, vorliegend bei nicht-umgeschaltetem Wahlventil WV1 zu dem Druckraum D4 des zweiten Gangstellzylinders Z2 und bei umgeschaltetem Wahlventil WV1 zu dem Druckraum D2 des ersten Gangstellzylinders Z1.

Das zweite Wahlventil WV2 ist ebenfalls als ein Schieberschaltventil mit einem Ventilkolben 51 und einer Ventilfeder 52 ausgebildet. Die Schaltdruckleitung 8 des zugeordneten ersten Vorsteuerventils VV1 ist an einen von der Ventilfeder 52 abgewandten stirnseitigen Schaltdruckraum 53 des zweiten Wahlventils WV2 angeschlossen. An einen mittigen Druckraum 54 dieses Wahlventils WV2 ist die von dem zweiten Gangregelventil GV2 kommende Arbeitsdruckleitung 33 angeschlossen. Durch die Steuerkanten benachbarter Steuerbunde des Ventilkolbens 51 ist dieser Druckraum 54 und damit die Arbeitsdruckleitung 33 wechselweise mit einer zu dem ersten Druckraum D3 des zweiten Gangstellzylinders Z2 führenden Anschlussleitung 55 oder mit einer zu dem ersten Druckraum D1 des ersten Gangstellzylinders Z1 führenden Anschlussleitung 56 verbindbar.

Somit wird die von dem zweiten Gangregelventil GV2 kommende Arbeitsdruckleitung 33 über das zweite Wahlventil WV2 wechselweise zu dem ersten Druckraum D1 des ersten Gangstellzylinders Z1 oder zu dem ersten Druckraum D3 des zweiten Gangstellzylinders Z2 durchgeschaltet, vorliegend bei nicht-umgeschaltetem Wahlventil WV2 zu dem Druckraum D3 des zweiten Gangstellzylinders Z2 und bei umgeschaltetem Wahlventil WV2 zu dem Druckraum D1 des ersten Gangstellzylinders Z1.

Die in den beiden Schaltstellungen der beiden Wahlventile WV1, WV2 jeweils abgesperrten Anschlussleitungen 45, 46, 55, 56 sind dann jeweils über eine Verbindung mit der Sammelleitung 17 drucklos geschaltet. Die Sammelleitung 17 steht über ein Vorbefüllungsventil VBV, durch das ein Leerlaufen der Druckräume D1 - D4 und der betreffenden Leitungen verhindert wird, mit einem nicht näher dargestellten Ölsumpf in Verbindung.

Zum Ausgleich und zur Dämpfung von Druckschwankungen sind die Steuerdruckleitungen 7, 27 der beiden Gangregelventile GV1, GV2 jeweils mit einer eingebauten Drossel 61, 63 und jeweils mit einem angeschlossenen Druckspeicher 62, 64 versehen.

Der Funktionsumfang dieser Steuerungsvorrichtung 1.1 im Hinblick auf die Steuerbarkeit der beiden Gangstellzylinder Z1, Z2 geht aus der Tabelle von Fig. 2 hervor. Dort ist schematisch angegeben, welche Druckräume D1 - D4 in Abhängigkeit von dem Schaltzustand der beiden Wahlventile WV1, WV2 jeweils durch die zugeordneten Gangregelventile GV1, GV2 regelbar sind. Dabei bedeutet in den oberen beiden Zeilen ein leeres Kreissymbol jeweils den nicht-umgeschalteten Schaltzustand und ein ausgefülltes Kreissymbol jeweils den umgeschalteten Schaltzustand der betreffenden Wahlventile WV1, WV2. In den unteren vier Zeilen ist der nicht-regelbare Zustand der betreffenden Druckräume D1 - D4 jeweils durch ein fehlendes Symbol und der regelbare Zustand der Druckräume D1 - D4 jeweils durch ein ausgefülltes Kreissymbol angegeben.

Daraus ist ersichtlich, dass mit drei Kombinationen von Schaltstellungen der beiden Wahlventile WV1, WV2 jeweils mindestens einer der Druckräume D1 - D4 durch eines der Gangregelventile GV1, GV2 steuerbar ist, und dass in einer Kombination davon zwei Druckräume D1, D2 gleichzeitig durch beide Gangregelventile GV1, GV2 unabhängig voneinander steuerbar sind. Diese Eigenschaft der Steuerungsvorrichtung 1.1 kann durch eine entsprechende Zuordnung der Gänge zu den Gangstellzylindern Z1, Z2 oder durch eine entsprechende Verbindung der Anschlussleitungen 45, 46, 55, 56 mit den Druckräumen D1 - D4 beispielsweise zur Beschleunigung bestimmter Schaltungen ausgenutzt werden.

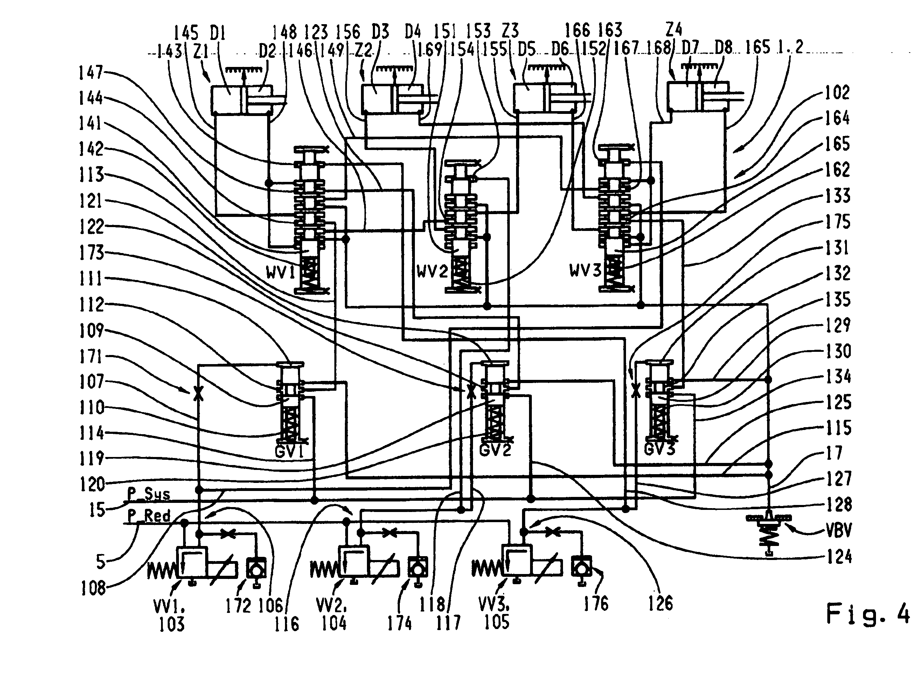

Ein zweites Anwendungsbeispiel von drei derartigen Vorsteuerventilen mit einer kombinierten Regel- und Schaltfunktion ist in einer erfindungsgemäßen hydraulischen Steuerungsvorrichtung 1.2 gemäß Fig. 4 dargestellt, die bei einem automatisierten Doppelkupplungsgetriebes anwendbar ist. Diese Steuerungsvorrichtung 1.2 umfasst vier doppeltwirksame Gangstellzylinder Z1 - Z4 mit jeweils zwei Druckräumen D1 - D8, drei druckgesteuerte Gangregelventile GV1, GV2, GV3 zur Regelung des Arbeitsdruckes in drei der Druckräume D1 - D8, eine Multiplexanordnung 102 aus drei druckgesteuerten Wahlventilen WV1, WV2, WV3 zur selektiven Zuordnung der drei Gangregelventile GV1, GV2, GV3 zu maximal drei der acht Druckräume D1 - D8, sowie drei als Magnetregelventile 103, 104, 105 ausgebildete Vorsteuerventile VV1, VV2, VV3 zur kombinierten Ansteuerung der drei Gangregelventile GV1, GV2, GV3 und der drei Wahlventile WV1, WV2, WV3.

Das erste Vorsteuerventil VV1, das beispielsweise als ein 3/2-Wege-Magnetregelventil oder als ein 3/3-Wege-Magnetregelventil ausgebildet sein kann, weist einen Anschluss einer einen Reduzierdruck P_Red führenden Steuerdruck-Versorgungsleitung 5, einen Steueranschluss 106 einer zu dem ersten Gangregelventil GV1 führenden Steuerdruckleitung 107 sowie zu einer zu dem dritten Wahlventil WV3 führenden Schaltdruckleitung 108, und einen Anschluss einer nicht näher dargestellten Drucklosleitung auf.

Das erste Gangregelventil GV1 ist als ein Schieberventil mit einem Ventilkolben 109 und einer Ventilfeder 110 ausgebildet. Die Steuerdruckleitung 107 des zugeordneten ersten Vorsteuerventils VV1 ist an einen von der Ventilfeder 110 abgewandten stirnseitigen Steuerdruckraum 111 des ersten Gangregelventils GV1 angeschlossen. Ein mittiger Druckraum 112 des ersten Gangregelventils GV1 steht über eine Arbeitsdruckleitung 113 mit dem ersten Wahlventil WV1 in Verbindung. Durch die Steuerkanten benachbarter Steuerbunde des Ventilkolbens 109 ist der mittige Druckraum 112 und damit die Arbeitsdruckleitung 113 regelbar mit einer Druckleitung 114, die von einer einen Systemdruck P_Sys führenden Versorgungsdruckleitung 15 abzweigt, und mit einer Drucklosleitung 115, die zu einer Sammelleitung 17 führt, verbindbar. Somit wird ein durch das Vorsteuerventil VV1 in der Steuerdruckleitung 107 eingestellter Vorsteuerdruck durch das Gangregelventil GV1 proportional in einen in der Arbeitsdruckleitung 113 wirksamen Arbeitsdruck umgesetzt.

Das zweite Vorsteuerventil VV2, das bevorzugt baugleich zu dem ersten Vorsteuerventil VV1 ausgeführt ist, weist einen Anschluss der den Reduzierdruck P_Red führenden Steuerdruck-Versorgungsleitung 5, einen Steueranschluss 116 einer zu dem zweiten Gangregelventil GV2 führenden Steuerdruckleitung 117 und einer zu dem zweiten Wahlventil WV2 führenden Schaltdruckleitung 118 sowie einen Anschluss einer nicht näher dargestellten Drucklosleitung auf.

Das zweite Gangregelventil GV2 ist baugleich mit dem ersten Gangregelventil GV1 als ein Schieberventil mit einem Ventilkolben 119 und einer Ventilfeder 120 ausgebildet. Die Steuerdruckleitung 117 des zugeordneten zweiten Vorsteuerventils VV2 ist an einen der Ventilfeder 120 abgewandten stirnseitigen Steuerdruckraum 121 des zweiten Gangregelventils GV2 angeschlossen. Ein mittiger Druckraum 122 des zweiten Gangregelventils GV2 steht über eine Arbeitsdruckleitung 123 mit dem ersten Wahlventil WV1 in Verbindung. Durch die Steuerkanten benachbarter Steuerbunde des Ventilkolbens 119 ist der mittige Druckraum 122 und damit die Arbeitsdruckleitung 123 regelbar mit einer Druckleitung 124, die von der Versorgungsdruckleitung 15 abzweigt, und mit einer Drucklosleitung 125, die zu der Sammelleitung 17 führt, verbindbar. Somit wird ein durch das Vorsteuerventil VV2 in der Steuerdruckleitung 117 eingestellter Vorsteuerdruck durch das Gangregelventil GV2 proportional in einen in der Arbeitsdruckleitung 123 wirksamen Arbeitsdruck umgesetzt.

Das dritte Vorsteuerventil VV3, das bevorzugt baugleich wie die anderen beiden Vorsteuerventile VV1, VV2 ausgeführt ist, weist einen Anschluss der den Reduzierdruck P_Red führenden Steuerdruck-Versorgungsleitung 5, einen Steueranschluss 126 einer zu dem dritten Gangregelventil GV3 führenden Steuerdruckleitung 127 und einer zu dem ersten Wahlventil WV1 führenden Schaltdruckleitung 128 sowie einen Anschluss einer nicht näher dargestellten Drucklosleitung auf.

Das dritte Gangregelventil GV3 ist baugleich mit den anderen beiden Gangregelventilen GV1, Gv2 als ein Schieberventil mit einem Ventilkolben 129 und einer Ventilfeder 130 ausgebildet. Die Steuerdruckleitung 127 des zugeordneten dritten Vorsteuerventils VV3 ist an einen von der Ventilfeder 130 abgewandten stirnseitigen Steuerdruckraum 131 des dritten Gangregelventils GV3 angeschlossen. Ein mittiger Druckraum 132 des dritten Gangregelventils GV3 steht über eine Arbeitsdruckleitung 133 mit dem dritten Wahlventil WV3 in Verbindung. Durch die Steuerkanten benachbarter Steuerbunde des Ventilkolbens 129 ist der mittige Druckraum 132 und damit die Arbeitsdruckleitung 133 regelbar mit einer Druckleitung 134, die von der Versorgungsdruckleitung 15 abzweigt, und mit einer Drucklosleitung 135, die zu der Sammelleitung 17 führt, verbindbar. Somit wird ein durch das Vorsteuerventil VV3 in der Steuerdruckleitung 127 eingestellter Vorsteuerdruck durch das Gangregelventil GV3 proportional in einen in der Arbeitsdruckleitung 133 wirksamen Arbeitsdruck umgesetzt.

Das erste Wahlventil WV1 ist als ein Schieberschaltventil mit einem Ventilkolben 141 und einer Ventilfeder 142 ausgebildet. Die Schaltdruckleitung 128 des zugeordneten dritten Vorsteuerventils VV3 ist an einen von der Ventilfeder 142 abgewandten stirnseitigen Schaltdruckraum 143 des ersten Wahlventils WV1 angeschlossen. An einen ersten mittigen Druckraum 144 dieses Wahlventils WV1 ist die von dem ersten Gangregelventil GV1 kommende Arbeitsdruckleitung 113 angeschlossen. Durch die Steuerkanten benachbarter Steuerbunde des Ventilkolbens 141 ist dieser Druckraum 144 und damit die Arbeitsdruckleitung 113 wechselweise mit einer zu dem ersten Druckraum D1 des ersten Gangstellzylinders Z1 führenden Anschlussleitung 145 oder mit einer zu dem zweiten Wahlventil WV2 führenden Verbindungsleitung 146 verbindbar.

An einen zweiten mittigen Druckraum 147 des ersten Wahlventils WV1 ist die von dem zweiten Gangregelventil GV2 kommende Arbeitsdruckleitung 123 angeschlossen. Durch die Steuerkanten benachbarter Steuerbunde des Ventilkolbens 141 ist dieser Druckraum 147 und damit die Arbeitsdruckleitung 123 wechselweise mit einer zu dem zweiten Druckraum D2 des ersten Gangstellzylinders Z1 führenden Anschlussleitung 148 oder mit einer zu dem dritten Wahlventil WV3 führenden Verbindungsleitung 149 verbindbar.

Somit werden die beiden von dem ersten Gangregelventil GV1 und dem zweiten Gangregelventil GV2 kommenden Arbeitsdruckleitungen 113 bzw. 123 über das erste Wahlventil WV1 wechselweise zu den beiden Druckräumen D1, D2 des ersten Gangstellzylinders Z1 oder weiter zu den beiden anderen Wahlventilen WV2, WV3 durchgeschaltet, vorliegend bei nicht-umgeschaltetem Wahlventil WV1 zu den Druckräumen D1, D2 des ersten Gangstellzylinders Z1 und bei umgeschaltetem Wahlventil WV1 weiter zu den anderen Wahlventilen WV2, WV3.

Das zweite Wahlventil WV2 ist ebenfalls als ein Schieberschaltventil mit einem Ventilkolben 151 und einer Ventilfeder 152 ausgebildet. Die Schaltdruckleitung 118 des zugeordneten zweiten Vorsteuerventils VV2 ist an einen von der Ventilfeder 152 abgewandten stirnseitigen Schaltdruckraum 153 des zweiten Wahlventils WV2 angeschlossen. An einen mittigen Druckraum 154 dieses Wahlventils WV2 ist die von dem ersten Wahlventil WV1 kommende Verbindungsleitung 146 angeschlossen. Durch die Steuerkanten benachbarter Steuerbunde des Ventilkolbens 151 ist dieser Druckraum 154 und damit die Verbindungsleitung 146 wechselweise mit einer zu dem ersten Druckraum D5 des dritten Gangstellzylinders Z3 führenden Anschlussleitung 155 oder mit einer zu dem ersten Druckraum D3 des zweiten Gangstellzylinders Z2 führenden Anschlussleitung 156 verbindbar.

Somit wird die von dem ersten Wahlventil GV1 kommende Verbindungsleitung 146, die bei umgeschaltetem ersten Wahlventil WV1 den durch das erste Gangregelventil GV1 eingestellten Arbeitsdruck führt, wechselweise zu den beiden Druckräumen D3, D5 des zweiten Gangstellzylinders Z2 und des dritten Gangstellzylinders Z3 durchgeschaltet, vorliegend bei nicht-umgeschaltetem Wahlventil WV2 zu dem Druckraum D5 des dritten Gangstellzylinders Z3 und bei umgeschaltetem Wahlventil WV2 zu dem Druckraum D3 des zweiten Gangstellzylinders Z2.

Das dritte Wahlventil WV3 ist weitgehend baugleich zu dem ersten Wahlventil WV1 ausgebildet und als ein Schieberschaltventil mit einem Ventilkolben 161 und einer Ventilfeder 162 ausgebildet. Die Schaltdruckleitung 108 des zugeordneten ersten Vorsteuerventils VV1 ist an einen von der Ventilfeder 162 abgewandten stirnseitigen Schaltdruckraum 163 des dritten Wahlventils WV3 angeschlossen. An einen ersten mittigen Druckraum 164 dieses Wahlventils WV3 ist die von dem dritten Gangregelventil GV3 kommende Arbeitsdruckleitung 133 angeschlossen. Durch die Steuerkanten benachbarter Steuerbunde des Ventilkolbens 161 ist dieser Druckraum 164 und damit die Arbeitsdruckleitung 133 wechselweise mit einer zu dem zweiten Druckraum D8 des vierten Gangstellzylinders Z4 führenden Anschlussleitung 165 oder mit einer zu dem zweiten Druckraum D6 des dritten Gangstellzylinders Z3 führenden Anschlussleitung 166 verbindbar.

An einen zweiten mittigen Druckraum 167 des dritten Wahlventils WV3 ist die von dem ersten Wahlventil WV1 kommende Verbindungsleitung 149 angeschlossen. Durch die Steuerkanten benachbarter Steuerbunde des Ventilkolbens 161 ist dieser Druckraum 167 und damit die Verbindungsleitung 149 wechselweise mit einer zu dem ersten Druckraum D7 des vierten Gangstellzylinders Z4 führenden Anschlussleitung 168 oder mit einer zu dem zweiten Druckraum D4 des zweiten Gangstellzylinders Z2 führenden Anschlussleitung 169 verbindbar.

Somit wird über das dritte Wahlventil die von dem dritten Gangregelventil GV3 kommende Arbeitsdruckleitung 133 wechselweise zu den Druckräumen D6 bzw. D8 des dritten Gangstellzylinders Z3 und des vierten Gangstellzylinders durchgeschaltet und die von dem ersten Wahlventil WV1 kommende Verbindungsleitung 149, die bei umgeschaltetem ersten Wahlventil WV1 den durch das zweite Gangregelventil GV2 eingestellten Arbeitsdruck führt, wechselweise zu den Druckräumen D4 bzw. D7 des zweiten Gangstellzylinders Z2 und des vierten Gangstellzylinders Z4 durchgeschaltet, vorliegend bei nicht umgeschaltetem Wahlventil WV3 zu den Druckräumen D7 bzw. D8 des vierten Gangstellzylinders Z4 und bei umgeschaltetem Wahlventil WV3 zu den Druckräumen D4 bzw. D6 des zweiten Gangstellzylinders Z2 und des dritten Gangstellzylinders Z3.

Die in den beiden Schaltstellungen der drei Wahlventile WV1, WV2, WV3 jeweils abgesperrten Anschlussleitungen 145, 148, 155, 156, 165, 166, 168, 169 und Verbindungsleitungen 146, 149 sind dann jeweils über eine Verbindung mit der Sammelleitung 17 drucklos geschaltet. Die Sammelleitung 17 steht über ein Vorbefüllungsventil VBV, durch das ein Leerlaufen der Druckräume D1 - D8 und der betreffenden Leitungen verhindert wird, mit einem nicht näher dargestellten Ölsumpf in Verbindung.

Zum Ausgleich und zur Dämpfung von Druckschwankungen sind die Steuerdruckleitungen 107, 117, 127 der drei Gangregelventile GV1, GV2, GV3 jeweils mit einer eingebauten Drossel 171, 173, 175 und jeweils mit einem angeschlossenen Druckspeicher 172, 174, 176 versehen.

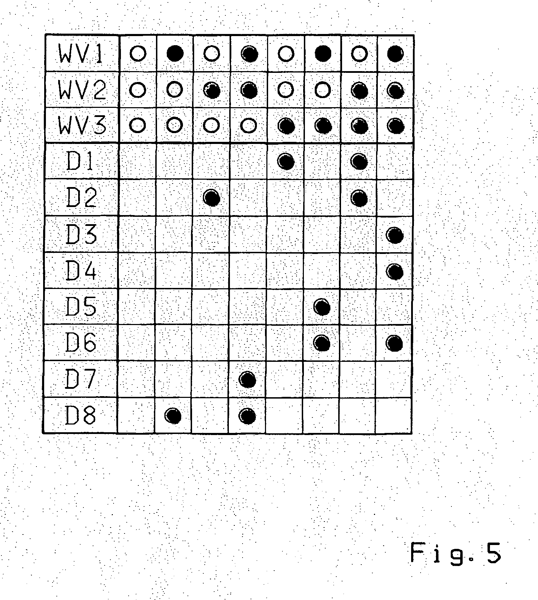

Der Funktionsumfang dieser Steuerungsvorrichtung 1.2 im Hinblick auf die Steuerbarkeit der vier Gangstellzylinder Z1 - Z4 geht aus der Tabelle von Fig. 5 hervor. Dort ist schematisch dargestellt, welche Druckräume D1 - D8 in Abhängigkeit des Schaltzustands der drei Wahlventile WV1, WV2, WV3 jeweils durch die zugeordneten Gangregelventile GV1, GV2, GV3 regelbar sind. Dabei bedeutet in den oberen drei Zeilen ein leeres Kreissymbol jeweils den nicht-umgeschalteten Schaltzustand und ein ausgefülltes Kreissymbol jeweils den umgeschalteten Schaltzustand der betreffenden Wahlventile WV1, WV2, WV3. In den unteren acht Zeilen ist der nicht-regelbare Zustand der betreffenden Druckräume D1 - D8 jeweils durch ein fehlendes Symbol und der regelbare Zustand der Druckräume D1 - D8 jeweils durch ein ausgefülltes Kreissymbol angegeben.

Daraus ist ersichtlich, dass in sieben Kombinationen von Schaltstellungen der drei Wahlventile WV1, WV2, WV3 jeweils mindestens einer der Druckräume D1 - D8 durch mindestens eines der Gangregelventile GV1, GV2, GV3 steuerbar ist, dass in vier Kombinationen von Schaltstellungen davon jeweils mindestens zwei der Druckräume D1 - D8 durch zwei der Gangregelventile GV1, GV2, GV3 gleichzeitig und unabhängig voneinander steuerbar sind, und dass in einer Kombination davon die drei Druckräume D3, D4, D6 gleichzeitig durch alle drei Gangregelventile GV1, GV2, GV3 unabhängig voneinander steuerbar sind.

Diese Eigenschaft der Steuerungsvorrichtung 1.2 kann durch eine entsprechende Zuordnung der Gänge zu den Gangstellzylindern Z1 - Z4 oder durch eine entsprechende Verbindung der Anschlussleitungen 145, 148, 155, 156, 165, 166, 168, 169 mit den Druckräumen D1 - D8, beispielsweise zur Beschleunigung bestimmter Schaltungen, ausgenutzt werden. Hierzu ist es vorteilhaft, wenn diejenigen zwei Druckräume D1, D2; D3, D4; D5, D6 oder D7, D8, deren Arbeitsdrücke in entsprechenden Schaltstellungen der Wahlventile WV1, WV2, WV3 jeweils gleichzeitig regelbar sind, wie dies in Fig. 4 abgebildet ist, jeweils einer gemeinsamen Schaltstange des Getriebes zugeordnet sind.

Ebenfalls ist es hierzu vorteilhaft, wenn die drei Druckräume D3, D4, D6, deren Arbeitsdrücke in einer entsprechenden Schaltstellung der Wahlventile WV1, WV2, WV3 gleichzeitig regelbar sind, denen im Fahrbetrieb häufig im schnellen Wechsel geschaltete Gänge, vorzugsweise der erste Gang G1, der zweite Gang G2, und der Rückwärtsgang R, zugeordnet sind, da dann eine hohe Anfahrbeschleunigung und ein schneller Fahrtrichtungswechsel beim Freischaukeln bzw. beim Rangieren möglich ist.

### Bezugszeichen

- 1.1: Hydraulische Steuerungsvorrichtung
- 1.2: Hydraulische Steuerungsvorrichtung
- 1.3: Hydraulische Steuerungsvorrichtung
- 2: Multiplexanordnung
- 3: Magnetregelventil
- 4: Magnetregelventil
- 5: Steuerdruck-Versorgungsleitung
- 6: Steueranschluss
- 7: Steuerdruckleitung
- 8: Schaltdruckleitung
- 9: Ventilkolben
- 10: Ventilfeder
- 11: Steuerdruckraum
- 12: Druckraum
- 13: Arbeitsdruckleitung
- 14: Druckleitung
- 15: Versorgungsdruckleitung
- 16: Drucklosleitung
- 17: Sammelleitung
- 26: Steueranschluss
- 27: Steuerdruckleitung
- 28: Schaltdruckleitung
- 29: Ventilkolben
- 30: Ventilfeder
- 31: Steuerdruckraum
- 32: Druckraum
- 33: Arbeitsdruckleitung
- 34: Druckleitung
- 36: Drucklosleitung
- 41: Ventilkolben
- 42: Ventilfeder
- 43: Schaltdruckraum
- 44: Druckraum
- 45: Anschlussleitung
- 46: Anschlussleitung
- 51: Ventilkolben
- 52: Ventilfeder
- 53: Schaltdruckraum
- 54: Druckraum
- 55: Anschlussleitung
- 56: Anschlussleitung
- 61: Drossel
- 62: Druckspeicher
- 63: Drossel
- 64: Druckspeicher
- 102: Multiplexanordnung
- 103: Magnetregelventil
- 104: Magnetregelventil
- 105: Magnetregelventil
- 106: Steueranschluss
- 107: Steuerdruckleitung
- 108: Schaltdruckleitung
- 109: Ventilkolben
- 110: Ventilfeder
- 111: Steuerdruckraum
- 112: Druckraum
- 113: Arbeitsdruckleitung
- 114: Druckleitung
- 115: Drucklosleitung
- 116: Steueranschluss
- 117: Steuerdruckleitung
- 118: Schaltdruckleitung
- 119: Ventilkolben
- 120: Ventilfeder
- 121: Steuerdruckraum
- 122: Druckraum
- 123: Arbeitsdruckleitung
- 124: Druckleitung
- 125: Drucklosleitung
- 126: Steueranschluss
- 127: Steuerdruckleitung
- 128: Schaltdruckleitung
- 129: Ventilkolben
- 130: Ventilfeder
- 131: Steuerdruckraum
- 132: Druckraum
- 133: Arbeitsdruckleitung
- 134: Druckleitung
- 135: Drucklosleitung
- 141: Ventilkolben
- 142: Ventilfeder
- 143: Schaltdruckraum
- 144: Druckraum
- 145: Anschlussleitung
- 146: Verbindungsleitung
- 147: Druckraum
- 148: Anschlussleitung
- 149: Verbindungsleitung
- 151: Ventilkolben
- 152: Ventilfeder
- 153: Schaltdruckraum
- 154: Druckraum
- 155: Anschlussleitung
- 156: Anschlussleitung
- 161: Ventilkolben
- 162: Ventilfeder
- 163: Schaltdruckraum
- 164: Druckraum
- 165: Anschlussleitung
- 166: Anschlussleitung
- 167: Druckraum
- 168: Anschlussleitung
- 169: Anschlussleitung
- 171: Drossel
- 172: Druckspeicher
- 173: Drossel
- 174: Druckspeicher
- 175: Drossel
- 176: Druckspeicher
- 202: Multiplexanordnung
- 203: Magnetregelventil
- 204: Magnetregelventil
- 205: Magnetschaltventil
- 206: Magnetschaltventil
- 208: Steueranschluss
- 209: Steuerdruckleitung
- 210: Ventilkolben
- 211: Steuerdruckraum
- 212: Druckraum
- 213: Arbeitsdruckleitung
- 214: Druckleitung
- 216: Drucklosleitung
- 218: Steueranschluss
- 219: Steuerdruckleitung
- 220: Ventilkolben
- 221: Steuerdruckraum
- 222: Druckraum
- 223: Arbeitsdruckleitung
- 224: Druckleitung
- 226: Drucklosleitung
- 228: Steueranschluss
- 229: Schaltdruckleitung
- 230: Ventilkolben
- 231: Ventilfeder
- 232: Schaltdruckraum
- 233: Druckraum
- 234: Verbindungsleitung
- 235: Verbindungsleitung
- 236: Druckraum
- 237: Verbindungsleitung
- 238: Verbindungsleitung
- 239: Steueranschluss
- 240: Schaltdruckleitung
- 241: Ventilkolben
- 242: Ventilfeder
- 243: Schaltdruckraum
- 244: Druckraum
- 245: Anschlussleitung
- 246: Anschlussleitung
- 247: Druckraum
- 249: Anschlussleitung
- 250: Anschlussleitung
- 251: Ventilkolben
- 252: Ventilfeder
- 253: Schaltdruckraum
- 254: Druckraum
- 255: Anschlussleitung
- 256: Anschlussleitung
- 257: Druckraum
- 259: Anschlussleitung
- 260: Anschlussleitung
- 261: Drossel
- 262: Druckspeicher
- 263: Drossel
- 264: Druckspeicher
- D1 - D8: Druckraum
- G1, G2: (Vorwärts-)Gang
- GV1 - GV3: Gangregelventil
- P_A: Arbeitsdruck
- P_Red: Reduzierdruck
- P_R0: Beginn des Regelbereichs
- P_S: Schaltdruck
- P_St: Steuerdruck
- P_Sys: Systemdruck
- ΔP_B1,ΔP_B2: Steuerdruckbereich
- ΔP_R: Regelbereich
- R: Rückwärtsgang
- RKL: Regelkennlinie
- SKL: Schaltkennlinie
- SZ: Schaltzustand
- TWV: Teilgetriebe-Wahlventil
- VBV: Vorbefüllungsventil
- W1 - W3: Vorsteuerventil
- VV3', VV4': Vorsteuerventil
- WV1 - WV3: Wahlventil
- ZWV1, ZWV2: Zylinder-Wahlventil
- Z1 - Z4: Gangstellzylinder

## Patentansprüche

1. Hydraulische Steuerungsvorrichtung eines automatisierten Stufenschaltgetriebes, mit mehreren Gangstellzylindern (Z1 - Z4) zum Ein- und Auslegen der Gänge des Stufenschaltgetriebes, mit mindestens zwei druckgesteuerten Gangregelventilen (GV1 - GV3) zur Steuerung des Arbeitsdruckes in jeweils einem Druckraum (D1 - D8) der Gangstellzylinder (Z1 - Z4) und mit einer Multiplexanordnung (2, 102) mehrerer einfach schaltbarer druckgesteuerter Wahlventile (WV1 - WV3) zur Zuordnung der Gangregelventile (GV1 - GV3) zu jeweils einem Druckraum (D1 - D8) der Gangstellzylinder (Z1 -Z4), **dadurch gekennzeichnet, dass** mindestens ein gemeinsames, als Regelventil ausgebildetes Vorsteuerventil (W1 - VV3) zur Ansteuerung eines der Gangregelventile (GV1 - GV2) und mindestens eines der Wahlventile (VW1 - WV3) vorgesehen ist, wobei das Vorsteuerventil (W1 - VV3) einen den Schaltdruck (P_S) des mindestens einen Wahlventils (WV1 - WV3) enthaltenden ersten Steuerdruckbereich (ΔP_B1) und einen den Regelbereich (AP_R) des Gangregelventils (GV1 - GV3) enthaltenden zweiten Steuerdruckbereich (ΔP_B2) aufweist.

2. Steuerungsvorrichtung nach Anspruch 1, **dadurch gekennzeichnet, dass** der erste Steuerdruckbereich (ΔP_B1) unterhalb des zweiten Steuerdruckbereiches (ΔP_B2) liegt, dass der Schaltdruck (P_S) des mindestens einen Wahlventils (WV1 - WV3) in etwa mittig innerhalb des ersten Steuerdruckbereiches (ΔP_B1) liegt, und dass der Regelbereich (AP_R) des Gangregelventils (GV1 - GV3) weitgehend identisch mit dem zweiten Steuerdruckbereich (ΔP_B2) ist.

3. Steuerungsvorrichtung nach Anspruch 2, dadurch **gekenn**z**eichnet**, dass der Beginn des Regelbereiches (P_RO) des Gangregelventils (GV1 - GV3) durch die Verwendung einer vorgespannten Ventilfeder (10, 30, 110, 120, 130) zu einem höheren Steuerdruck (P_St) des Vorsteuerventils (W1 - VV3) verschoben und eingestellt ist.

4. Steuerungsvorrichtung nach zumindest einem der Ansprüche 1 bis 3, **dadurch gekennzeichnet, dass** das Vorsteuerventil (W1 - VV3) als ein Magnetregelventil (3, 4, 103, 104, 105) mit einem Anschluss einer einen eingangsseitigen Steuerdruck (P_Red) führenden Steuerdruck-Versorgungsleitung (5), einem Steueranschluss (6, 26, 106, 116, 126) einer zu einem zugeordneten Gangregelventil (GV1 - GV3) führenden Steuerdruckleitung (7, 27, 107, 117, 127) und einer zu einem zugeordneten Wahlventil (WV1 - WV3) führenden Schaltdruckleitung (8, 28, 108, 118, 128) sowie mit einem Anschluss einer Drucklosleitung ausgebildet ist.

5. Steuerungsvorrichtung nach zumindest einem der Ansprüche 1 bis 4, **dadurch gekennzeichnet, dass** das Gangregelventil (GV1 - GV3) und das mindestens eine Wahlventil (WV1 - WV3), die durch das gemeinsame Vorsteuerventil (VV1 - VV3) ansteuerbar sind, verschiedenen Schaltstangen oder verschiedenen Teilgetrieben zugeordnet sind.

6. Steuerungsvorrichtung nach Anspruch 5, **dadurch gekennzeichnet, dass** bei einem Stufenschaltgetriebe oder einem Teilgetriebe eines Stufenschaltgetriebes mit zwei Schaltstangen eine Schaltungsanordnung mit zwei Gangregelventilen (GV1, GV2), zwei Wahlventilen (WV1, WV2) und zwei Vorsteuerventilen (VV1, VV2) vorgesehen ist, bei der jeweils zwei Druckräume (D1 - D4) wechselweise über jeweils eines der Wahlventile (WV1, WV2) mit der Arbeitsdruckleitung (13, 33) eines zugeordneten Gangregelventils (GV1, GV2) oder mit einer Drucklosleitung verbindbar sind, wobei ein Steuerdruckraum (11, 31) des jeweiligen Gangregelventils (GV1, GV2) über eine Steuerdruckleitung (7, 27) sowie ein Schaltdruckraum (43, 53) des dem jeweils anderen Gangregelventil (GV1, GV2) zugeordneten Wahlventils (WV1, WV2) über eine Schaltdruckleitung (8, 28) jeweils mit einem Steueranschluss (6, 26) eines gemeinsamen Vorsteuerventils (VV1, VV2) verbunden sind.

7. Steuerungsvorrichtung nach Anspruch 6, **dadurch gekennzeichnet, dass** die beiden, bei nicht-umgeschalteten Wahlventilen (WV1, WV2) mit den Gangregelventilen (GV1, GV2) verbundenen Druckräume (D3, D4) und die beiden, bei umgeschalteten Wahlventilen (WV1, WV2) mit den Gangregelventilen (GV1, GV2) verbundenen Druckräume (D1, D2) jeweils einer gemeinsamen Schaltstange zugeordnet sind.

8. Steuerungsvorrichtung nach Anspruch 6, **dadurch gekennzeichnet, dass** die beiden, bei nicht-umgeschalteten Wahlventilen (WV1, WV2) mit den Gangregelventilen (GV1, GV2) verbundenen Druckräume (D3, D4) und die beiden, bei umgeschalteten Wahlventilen (WV1, WV2) mit den Gangregelventilen (GV1, GV2) verbundenen Druckräume (D1, D2) verschiedenen Schaltstangen zugeordnet sind.

9. Steuerungsvorrichtung nach Anspruch 5, **dadurch gekennzeichnet, dass** bei einem Stufenschaltgetriebe mit vier Schaltstangen eine Schaltungsanordnung mit drei Gangregelventilen (GV1 - GV3), drei Wahlventilen (WV1 - WV3) und drei Vorsteuerventilen (VV1 - VV3) vorgesehen ist,
bei der über ein erstes Wahlventil (WV1) die Arbeitsdruckleitung (113) eines ersten Gangregelventils (GV1) und die Arbeitsdruckleitung (123)eines zweiten Gangregelventils (GV2) jeweils wechselweise mit einem zugeordneten Druckraum (D1; D2) oder mit einer jeweils zu einem anderen Wahlventil (Wv2, WV3) führenden Verbindungsleitung (146; 149) verbindbar sind,
bei der über ein zweites Wahlventil (WV2) die von dem ersten Wahlventil (WV1) kommende Verbindungsleitung (146) wechselweise mit zwei verschiedenen Druckräumen (D3, D5) verbindbar ist,
und bei der über ein drittes Wahlventil (WV3) die Arbeitsdruckleitung (133) eines dritten Gangregelventils (GV3) und die von dem ersten Wahlventil (WV1) kommende Verbindungsleitung (149) jeweils wechselweise mit zwei verschiedenen Druckräumen (D6, D8; D4, D7) verbindbar sind,
wobei ein Steuerdruckraum (111) des ersten Gangregelventils (GV1) und ein Schaltdruckraum (163) des dritten Wahlventils (WV3) mit dem Steueranschluss (106) eines gemeinsamen ersten Vorsteuerventils (VV1) verbunden sind,
wobei ein Steuerdruckraum (121) des zweiten Gangregelventils (GV2) und ein Schaltdruckraum (153) des zweiten Wahlventils (VV2) mit dem Steueranschluss (116) eines gemeinsamen zweiten Vorsteuerventils (VV2) verbunden sind
und wobei ein Steuerdruckraum (131) des dritten Gangregelventils (GV3) und ein Schaltdruckraum (143) des ersten Wahlventils (WV1) mit dem Steueranschluss (126) eines gemeinsamen dritten Vorsteuerventils (VV3) verbunden sind.

10. Steuerungsvorrichtung nach Anspruch 9, **dadurch gekennzeichnet, dass** die jeweiligen zwei Druckräume (D1, D2; D3, D4; D5, D6; D7, D8), deren Arbeitsdrücke in entsprechenden Schaltstellungen der Wahlventile (WV1 - WV3) jeweils gleichzeitig regelbar sind, jeweils einer gemeinsamen Schaltstange zugeordnet sind.

11. Steuerungsvorrichtung nach Anspruch 9 oder 10, **dadurch gekennzeichnet, dass** diejenigen drei Druckräume (D3, D4, D6), deren Arbeitsdrücke in einer entsprechenden Schaltstellung der Wahlventile (WV1 -WV3) gleichzeitig regelbar sind, den im Fahrbetrieb häufig im schnellen Wechsel geschalteten Gängen, vorzugsweise dem ersten Gang G1, dem zweiten Gang G2 sowie dem Rückwärtsgang R, zugeordnet sind.

## Claims

1. Hydraulic control device of an automatic multi-stage shift transmission, having a plurality of gear actuation cylinders (Z1 - Z4) for engaging and disengaging the gears of the multi-stage shift transmission, having at least two pressure-controlled gear regulation valves (GV1 - GV3) for controlling the working pressure in in each case one pressure chamber (D1 - D8) of the gear actuation cylinders (Z1 - Z4), and having a multiplex arrangement (2, 102) of a plurality of single-acting pressure-controlled selector valves (WV1 - WV3) for assigning the gear regulation valves (GV1 - GV3) to in each case one pressure chamber (D1 - D8) of the gear actuation cylinders (Z1 - Z4), **characterized in that** at least one common pilot control valve (VV1 - VV3) designed as a regulating valve is provided for activating one of the gear regulation valves (GV1 - GV2) and at least one of the selector valves (WV1 - WV3), wherein the pilot control valve (VV1 - VV3) has a first control pressure range (ΔP_B1), which encompasses the switching pressure (P_S) of the at least one selector valve (WV1 - WV3), and a second control pressure range (ΔP_B2), which encompasses the regulating range (ΔP_R) of the gear regulation valve (GV1 - GV3).

2. Control device according to Claim 1, **characterized in that** the first control pressure range (ΔP_B1) lies below the second control pressure range (ΔP_B2), **in that** the switching pressure (P_S) of the at least one selector valve (WV1 - WV3) lies approximately in the middle of the first control pressure range (ΔP_B1), and **in that** the regulating range (ΔP_R) of the gear regulation valve (GV1 - GV3) is substantially identical to the second control pressure range (ΔP_B2).

3. Control device according to Claim 2, **characterized in that** the start of the regulating range (P_R0) of the gear regulation valve (GV1 - GV3) is displaced and set to a higher control pressure (P_St) of the pilot control valve (VV1 - VV3) through the use of a preloaded valve spring (10, 30, 110, 120, 130).

4. Control device according to at least one of Claims 1 to 3, **characterized in that** the pilot control valve (VV1 - VV3) is formed as a magnet-operated regulating valve (3, 4, 103, 104, 105) with a port for a control pressure supply line (5) which conducts an inlet-side control pressure (P_Red), with a control port (6, 26, 106, 116, 126) for a control pressure line (7, 27, 107, 117, 127) which leads to an associated gear regulation valve (GV1 - GV3) and for a switching pressure line (8, 28, 108, 118, 128) which leads to an associated selector valve (WV1 - WV3), and with a port for an unpressurized line.

5. Control device according to at least one of Claims 1 to 4, **characterized in that** the gear regulation valve (GV1 - GV3) and the at least one selector valve (WV1 - WV3) which are capable of being activated by the common pilot control valve (VV1 - VV3) are assigned to different shift rods or different component transmissions.

6. Control device according to Claim 5, **characterized in that**, in the case of a multi-stage shift transmission or a component transmission of a multi-stage shift transmission having two shift rods, a circuit arrangement is provided which has two gear regulation valves (GV1, GV2), two selector valves (WV1, WV2) and two pilot control valves (VV1, VV2), in which circuit arrangement in each case two pressure chambers (D1 - D4) can be connected alternately via in each case one of the selector valves (WV1, WV2) to the working pressure line (13, 33) of an associated gear regulation valve (GV1, GV2) or to an unpressurized line, wherein a control pressure chamber (11, 31) of the respective gear regulation valve (GV1, GV2) is connected via a control pressure line (7, 27), and a switching pressure chamber (43, 53) of the selector valve (WV1, WV2) assigned to the in each case other gear regulation valve (GV1, GV2) is connected via a switching pressure line (8, 28), in each case to a control port (6, 26) of a common pilot control valve (VV1, VV2).

7. Control device according to Claim 6, **characterized in that** the two pressure chambers (D3, D4) which are connected to the gear regulation valves (GV1, GV2) when the selector valves (WV1, WV2) are in a non-switched state and the two pressure chambers (D1, D2) which are connected to the gear regulation valves (GV1, GV2) when the selector valves (WV1, WV2) are in a switched state are assigned in each case to a common shift rod.

8. Control device according to Claim 6, **characterized in that** the two pressure chambers (D3, D4) which are connected to the gear regulation valves (GV1, GV2) when the selector valves (WV1, WV2) are in a non-switched state and the two pressure chambers (D1, D2) which are connected to the gear regulation valves (GV1, GV2) when the selector valves (WV1, WV2) are in a switched state are assigned to different shift rods.

9. Control device according to Claim 5, **characterized in that**, in the case of a multi-stage shift transmission with four shift rods, a circuit arrangement is provided which has three gear regulation valves (GV1 - GV3), three selector valves (WV1 - WV3) and three pilot control valves (VV1 - VV3), in which circuit arrangement, by means of a first selector valve (WV1), the working pressure line (113) of a first gear regulation valve (GV1) and the working pressure line (123) of a second gear regulation valve (GV2) can be connected in each case alternately to an associated pressure chamber (D1; D2) or to a connecting line (146; 149) which leads in each case to another selector valve (WV2, WV3),
in which circuit arrangement, by means of a second selector valve (WV2), the connecting line (146) leading from the first selector valve (WV1) can be connected alternately to two different pressure chambers (D3, D5),
and in which circuit arrangement, by means of a third selector valve (WV3), the working pressure line (133) of a third gear regulation valve (GV3) and the connecting line (149) leading from the first selector valve (WV1) can be connected in each case alternately to two different pressure chambers (D6, D8; D4, D7), wherein a control pressure chamber (111) of the first gear regulation valve (GV1) and a switching pressure chamber (163) of the third selector valve (WV3) are connected to the control port (106) of a common first pilot control valve (VV1),
wherein a control pressure chamber (121) of the second gear regulation valve (GV2) and a switching pressure chamber (153) of the second selector valve (WV2) are connected to the control port (116) of a common second pilot control valve (VV2),
and wherein a control pressure chamber (131) of the third gear regulation valve (GV3) and a switching pressure chamber (143) of the first selector valve (WV1) are connected to the control port (126) of a common third pilot control valve (VV3).

10. Control device according to Claim 9, **characterized in that** the respective two pressure chambers (D1, D2; D3, D4; D5, D6; D7, D8) whose working pressures can be regulated in each case simultaneously in corresponding switching positions of the selector valves (WV1 - WV3), are assigned in each case to a common shift rod.

11. Control device according to Claim 9 or 10, **characterized in that** those three pressure chambers (D3, D4, D6) whose working pressures can be regulated simultaneously in a corresponding switching position of the selector valves (WV1 - WV3) are assigned to those gears which are shifted frequently in rapid alternation during driving operation, preferably to the first gear G1, the second gear G2 and the reverse gear R.

## Revendications

1. Dispositif de commande hydraulique d'une boîte de vitesses automatisée à rapports étagés, comprenant plusieurs cylindres de commande de rapports (Z1 - Z4) pour l'engagement ou le désengagement des rapports de la boîte de vitesses à rapports étagés, au moins deux soupapes de régulation de rapports à commande en pression (GV1 - GV3) pour la commande de la pression de travail dans un espace de pression respectif (D1 - D8) des cylindres de commande de rapports (Z1 - Z4), et un agencement multiplex (2, 102) de plusieurs soupapes de commutation (WV1-WV3) commandées en pression à commutation simple pour affecter les soupapes de régulation de rapports (GV1-GV3) à chaque fois à un espace de pression (D1-D8) des cylindres de commande de rapports (Z1 - Z4), **caractérisé en ce qu'**au moins une soupape pilote commune (VV1-VV3) réalisée sous forme de soupape de régulation est prévue pour la commande de l'une des soupapes de régulation de rapports (GV1-GV2) et d'au moins l'une des soupapes de commutation (WV1-WV3), la soupape pilote (VV1-VV3) présentant une première plage de pression de commande (ΔP_B1) contenant la pression de commutation (P_S) de l'au moins une soupape de commutation (WV1-WV3) et une deuxième plage de pression de commande (ΔP_B2) contenant la plage de régulation (ΔP_R) de la soupape de régulation de rapports (GV1-GV3).

2. Dispositif de commande selon la revendication 1, **caractérisé en ce que** la première plage de pression de commande (ΔP_B1) se situe en dessous de la deuxième plage de pression de commande (ΔP-B2), **en ce que** la pression de commutation (P_S) de l'au moins une soupape de commutation (WV1-WV3) se situe approximativement au milieu de la première plage de pression de commande (ΔP_B1), et **en ce que** la plage de régulation (ΔP_R) de la soupape de régulation de rapports (GV1-GV3) est sensiblement identique à la deuxième plage de pression de commande (ΔP_B2).

3. Dispositif de commande selon la revendication 2, **caractérisé en ce que** le début de la plage de régulation (Δ_R0) de la soupape de régulation de rapports (GV1-GV3) est déplacé et ajusté par l'utilisation d'un ressort de soupape précontraint (10, 30, 110, 120, 130) vers une pression de commande supérieure (P_St) de la soupape pilote (VV1-VV3).

4. Dispositif de commande selon au moins l'une quelconque des revendications 1 à 3, **caractérisé en ce que** la soupape pilote (VV1-VV3) est réalisée sous la forme d'une électrovanne de régulation (3, 4, 103, 104, 105) avec un raccord d'une conduite d'alimentation en pression de commande (5) alimentant une pression de commande (P_Red) du côté de l'entrée, un raccord de commande (6, 26, 106, 116, 126) d'une conduite de pressions de commande (7, 27, 107, 117, 127) conduisant à une soupape de régulation de rapports (GV1-GV3), et d'une conduite de pression de commutation (8, 28, 108, 118, 128) conduisant à une soupape de commutation (WV1-WV3) associée, ainsi qu'avec un raccord d'une conduite sans pression.

5. Dispositif de commande selon au moins l'une quelconque des revendications 1 à 4, **caractérisé en ce que** la soupape de régulation de rapports (GV1-GV3) et l'au moins une soupape de commutation (WV1-WV3), qui peuvent être commandées par la soupape pilote commune (VV1-VV3), sont associées à différentes tiges de commutation ou différentes transmissions partielles.

6. Dispositif de commande selon la revendication 5, **caractérisé en ce que** pour une boîte de vitesses automatisée à rapports étagés ou une transmission partielle d'une boîte de vitesses automatisée à rapports étagés avec deux tiges de commutation, il est prévu un agencement de changement de vitesse avec deux soupapes de régulation de rapports (GV1, GV2), deux soupapes de commutation (WV1, WV2) et deux soupapes pilotes (VV1, VV2), dans lequel à chaque fois deux espaces de pression (D1-D4) peuvent être raccordés en alternance par le biais de l'une respective des soupapes de commutation (WV1, WV2) à la conduite de pression de travail (13, 33) d'une soupape de régulation de rapports (GV1, GV2) associée ou à une conduite sans pression, un espace de pression de commande (11, 31) de la soupape de régulation de rapports (GV1, GV2) associée étant connecté par le biais d'une conduite de commande (7, 27), et un espace de pression de commutation (43, 53) de la soupape de commutation (WV1, WV2) associée à l'autre soupape de régulation de rapports (GV1, GV2) respective étant connecté par le biais d'une conduite de pression de commutation (8, 28) à chaque fois à un raccord de commande (6, 26) d'une soupape pilote commune (VV1, VV2).

7. Dispositif de commande selon la revendication 6, **caractérisé en ce que** les deux espaces de pression (D3, D4) connectés aux soupapes de régulation de rapports (GV1, GV2) lorsque les soupapes de commutation (WV1, WV2) ne sont pas commutées, et les deux espaces de pression (D1, D2) connectés aux soupapes de régulation de rapports (GV1, GV2) lorsque les soupapes de commutation (WV1, WV2) sont commutées, sont à chaque fois associés à une tige de commutation commune.

8. Dispositif de commande selon la revendication 6, **caractérisé en ce que** les deux espaces de pression (D3, D4) connectés aux soupapes de régulation de rapports (GV1, GV2) lorsque les soupapes de commutation (WV1, WV2) ne sont pas commutées, et les deux espaces de pression (D1, D2) connectés aux soupapes de régulation de rapports (GV1, GV2) lorsque les soupapes de commutation (WV1, WV2) sont commutées, sont associés à des tiges de commutation différentes.

9. Dispositif de commande selon la revendication 5, **caractérisé en ce que** dans le cas d'une boîte de vitesses à rapports étagés avec quatre tiges de commutation, on prévoit un agencement de changement de vitesse avec trois soupapes de régulation de rapports (GV1 - GV3), trois soupapes de commutation (WV1-WV3) et trois soupapes pilotes (VV1-VV3), dans lequel la conduite de pression de travail (113) d'une première soupape de régulation de rapport (GV1) et la conduite de pression de travail (123) d'une deuxième soupape de régulation de rapport (GV2) peuvent être à chaque fois connectées par le biais d'une première soupape de commutation (WV1) en alternance à un espace de pression associé (D2 ; D2) ou à une conduite de connexion (146 ; 149) conduisant à chaque fois à une autre soupape de commutation (WV2, WV3),
dans lequel la conduite de connexion (146) provenant de la première soupape de commutation (WV1) peut être connectée par le biais d'une deuxième soupape de commutation (WV2) en alternance à deux espaces de pression différents (D3, D5),
et dans lequel la conduite de pression de travail (133) d'une troisième soupape de régulation de rapport (GV3) et la conduite de connexion (149) provenant de la première soupape de commutation (WV1) peuvent être connectées à chaque fois par le biais d'une troisième soupape de commutation (WV3) en alternance à deux espaces de pression différents (D6, D8 ; D4, D7),
un espace de pression de commande (111) de la première soupape de régulation de rapport (GV1) et un espace de pression de commutation (163) de la troisième soupape de commutation (WV3) étant connectés au raccord de commande (106) d'une première soupape pilote commune (VV1),
un espace de pression de commande (121) de la deuxième soupape de régulation de rapport (GV2) et un espace de pression de commutation (153) de la deuxième soupape de régulation de rapport (WV2) étant connectés au raccord de commande (116) d'une deuxième soupape pilote commune (VV2),
et un espace de pression de commande (131) de la troisième soupape de régulation de rapport (GV3) et un espace de pression de commutation (143) de la première soupape de commutation (WV1) étant connectés au raccord de commande (126) d'une troisième soupape pilote commune (VV3).

10. Dispositif de commande selon la revendication 9, **caractérisé en ce que** les deux espaces de pression respectifs (D1, D2 ; D3, D4 ; D5, D6 ; D7, D8), dont les pressions de travail peuvent à chaque fois être régulées simultanément dans des positions de commutation correspondantes des soupapes de commutation (WV1-WV3), sont associés à chaque fois à une tige de commutation commune.

11. Dispositif de commande selon la revendication 9 ou 10, **caractérisé en ce que** les trois espaces de pression (D3, D4, D6) dont les pressions de travail peuvent être régulées simultanément dans une position de commutation correspondante des soupapes de sélection (WV1-WV3) sont associés aux rapports souvent commutés en mode de conduite dans un changement de vitesse rapide, de préférence le premier rapport G1, le deuxième rapport G2 et la marche arrière R.
